(19) Europäisches Patentamt
European Patent Office
Office européen des brevets

(11) **EP 4 311 597 A1**

(12) **EUROPEAN PATENT APPLICATION**

(43) Date of publication:
**31.01.2024 Bulletin 2024/05**

(21) Application number: **23187484.3**

(22) Date of filing: **25.07.2023**

(51) International Patent Classification (IPC):
**B01D 67/00** (2006.01)     **B01D 69/12** (2006.01)
**C08F 122/12** (2006.01)     **C08F 222/10** (2006.01)
**C08J 9/28** (2006.01)

(52) Cooperative Patent Classification (CPC):
**B01D 67/0006; C08F 122/12; C08F 222/102;**
**C08J 9/286;** B01D 69/02; B01D 69/12; B01D 71/82;
B01D 2323/34; B01D 2325/0283; B01D 2325/44;
C08J 2201/05; C08J 2205/044

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.07.2022 JP 2022122211**
**09.06.2023 JP 2023095693**

(71) Applicant: **Ricoh Company, Ltd.**
**Tokyo 143-8555 (JP)**

(72) Inventors:
• **OHKIMOTO, Miku**
  **Tokyo, 143-8555 (JP)**
• **TAKAUJI, Keigo**
  **Tokyo, 143-8555 (JP)**
• **NOSE, Daisuke**
  **Tokyo, 143-8555 (JP)**

(74) Representative: **Marks & Clerk LLP**
**15 Fetter Lane**
**London EC4A 1BW (GB)**

(54) **LIQUID COMPOSITION, LAMINATED STRUCTURE BODY, METHOD OF MANUFACTURING LAMINATED STRUCTURE BODY, AND METHOD OF MANUFACTURING POWER STORAGE ELEMENT OR POWER GENERATION ELEMENT**

(57)     Provided is a liquid composition including a polymerizable compound and a liquid. The polymerizable compound includes a polymerizable compound having a functional group capable of forming a covalent bond with a hydroxyl group. The liquid composition forms a porous resin by polymerization. The light transmittance at a wavelength of 550 nm measured while stirring the liquid composition is 30% or more. In a process where the liquid composition forms the porous resin by polymerization, an increase rate of a haze value of a haze measuring element before and after the polymerization is 1.0% or more.

EP 4 311 597 A1

**Description**

BACKGROUND

Technical Field

The present disclosure relates to a liquid composition, a laminated structure body, a method of manufacturing a laminated structure body, and a method of manufacturing a power storage element or a power generation element.

Related Art

Generally, porous structure bodies can be used for various applications. As an example, by appropriately selecting the shape and the size of pores, the surface characteristics of a skeleton portion, and the like in the porous structure body, it is possible to provide a separation layer that transmits or blocks only specific substances. As another example, by utilizing the wide surface area and the void volume of the porous structure body, it is possible to provide an efficient reaction field or storage field for gases and liquids taken in from the outside. Therefore, for a liquid composition that is easy to handle, can be easily applied to various locations, and can form a porous structure body, the range of applications is expected to greatly expand.

As an example of such a liquid composition that can form a porous structure body, there is proposed a porous material-forming photocurable resin composition containing, as essential components, a photopolymerizable monomer (A), an organic compound (B) that is incompatible with the photopolymerizable monomer (A), a common solvent (C) compatible with the photopolymerizable monomer (A) and the organic compound (B), and a photopolymerization initiator (D) (for example, see Japanese Unexamined Patent Application Publication No. 2004-051783).

If a liquid composition that can form a porous structure body is formed on a printing base material, it is desired that holes in the porous structure body are penetrable, and the formed porous structure body and the base material adhere to each other.

If the penetrability of holes in the porous structure body is low, a substance permeation function may be impaired. In general, when a layer is laminated on a target object such as a base material, an interface is formed between the target object and the layer. However, if the adhesiveness at the interface is weak, peeling may easily occur between the target object and the layer. If peeling occurs between the target object and the layer, an original function of the base material and a function of the porous structure body are impaired.

As a method for improving the adhesiveness, there have been proposed a method of impregnating the inside of a base material with a liquid composition to provide an anchor layer, a method of providing a non-porous adhesion layer such as an adhesive resin, and a method of decreasing the porosity of the porous structure body to increase contact points between the porous structure body and the base material (for example, see Japanese Unexamined Patent Application Publication No. 2016-104551).

SUMMARY

An object of the present invention is to provide a liquid composition capable of forming, on a base material, a porous resin having excellent adhesiveness to the base material and excellent substance permeability.

A liquid composition of the present embodiment as a means for solving the above-mentioned problems is a liquid composition containing a polymerizable compound and a liquid. The polymerizable compound includes a polymerizable compound having a functional group capable of forming a covalent bond with a hydroxyl group. The liquid composition forms a porous resin by polymerization. A light transmittance at a wavelength of 550 nm measured while stirring the liquid composition is 30% or more. In a process where the liquid composition forms the porous resin by polymerization, an increase rate of a haze value of a haze measuring element before and after the polymerization is 1.0% or more.

According to the present embodiment, it is possible to provide a liquid composition capable of forming, on a base material, a porous resin having excellent adhesiveness to the base material and excellent substance permeability.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a schematic diagram illustrating an example of a laminated structure body according to the present embodiment;

FIG. 2 is a schematic diagram illustrating another example of a laminated structure body according to the present embodiment;

FIG. 3 is a schematic diagram illustrating an example of an apparatus for manufacturing a laminated structure body for implementing a method of manufacturing a laminated structure body according to the present embodiment;

FIG. 4 is a schematic diagram illustrating a modification of a liquid discharge apparatus of FIG. 3;

FIG. 5 is a schematic diagram illustrating another example of a liquid discharge apparatus forming an apparatus for manufacturing a laminated structure body according to the present embodiment;

FIG. 6 is a schematic diagram illustrating a modification of the liquid discharge apparatus of FIG. 5;

FIG. 7 is a configuration diagram illustrating an example of a printing portion using a drum-shaped intermediate transfer body as the apparatus for manufacturing a laminated structure body according to the present embodiment;

FIG. 8 is a configuration diagram illustrating an example of a printing portion using an endless belt type intermediate transfer body as the apparatus for manufacturing a laminated structure body according to the present embodiment;

FIG. 9 is an exploded schematic view illustrating an example of a liquid discharge head;

FIG. 10 is an explanatory diagram illustrating an example of a channel configuration of the liquid discharge head;

FIG. 11 is a cross-sectional perspective view illustrating an example of the channel configuration of the liquid discharge head;

FIG. 12 is a configuration diagram illustrating an example of a head including a parallelogram-shaped nozzle plate;

FIG. 13 is an explanatory diagram illustrating a state where a plurality of the heads in FIG. 12 are aligned; and

FIG. 14 is a schematic diagram illustrating an example of a material-jet type fabrication apparatus.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a", "an", and "the" are intended to include the plural forms as well, unless the context clearly indicates otherwise.

(Liquid Composition)

A liquid composition according to the present embodiment is a liquid composition containing a polymerizable compound and a liquid. The polymerizable compound includes a polymerizable compound having a functional group capable of forming a covalent bond with a hydroxyl group. The liquid composition forms a porous resin by polymerization. The light transmittance at a wavelength of 550 nm measured while stirring the liquid composition is 30% or more. In a process where the liquid composition forms the porous resin by polymerization, an increase rate in a haze value of a haze measuring element before and after the polymerization is 1.0% or more.

With regard to the problems in the related art, that is, to improve the adhesiveness, a porous structure body is formed by the following methods. For example, a method of impregnating the inside of a base material with a liquid composition to provide an anchor layer, a method of providing a non-porous adhesion layer such as an adhesive resin, and a method of increasing contact points between the porous structure body and the base material by decreasing the porosity of the porous structure body may be used to form the porous structure body. However, by using these methods, the penetrability of the holes in the porous structure body is lowered. Therefore, it is difficult to achieve both adhesiveness to the base material and substance permeability, and the liquid composition of the present embodiment is based on these findings.

In particular, in battery applications such as power storage elements including batteries and power generation elements including fuel cells, if a porous structure body of the related art is formed on an electrode as a base material to form an insulating layer, there are problems including the following ones. The penetrability of the holes in the porous structure body is lowered and thus, it is not possible to obtain sufficient substance permeability. Further, it is difficult to ensure ion permeability, so that the battery performance deteriorates. If the adhesiveness between the porous structure body and the base material is low or insufficient, there is a risk of deformation due to an external impact or pressure inside the element. Further, when foreign matter such as a metal piece penetrates into a space between the porous structure body and the base material, a gap is formed, which may easily cause a short circuit.

The liquid composition of the present embodiment contains a polymerizable compound and a liquid, and if desired, further contains other components such as a polymerization initiator.

The liquid composition forms a porous resin. That is, when the polymerizable compound in the liquid composition is polymerized and cured, a resin structure body (also referred to as a "porous resin" or a "porous structure body") including a porous structure having a resin skeleton is formed.

Here, the expression "the liquid composition forms a porous resin" refers not only to a case where a porous resin is formed in a liquid composition, but also includes a case where a precursor of the porous resin (for example, a skeleton portion of the porous resin) is formed in a liquid composition, and the porous resin is formed in a subsequent step (for example, a heating step and the like).

<Polymerizable Compound>

The polymerizable compound polymerizes to form a resin, and forms a porous resin depending on the composition and the characteristics of the liquid composition.

The polymerizable compound contains a polymerizable compound having a functional group capable of forming a covalent bond with a hydroxyl group, and preferably contains another polymerizable compound.

The polymerizable compound having a functional group capable of forming a covalent bond with a hydroxyl group is a polymerizable compound having a functional group capable of forming a covalent bond with a hydroxyl group.

The other polymerizable compound is a polymerizable compound not having a functional group capable of forming a covalent bond with a hydroxyl group.

Below, common aspects of the above-mentioned polymerizable compound including a polymerizable compound having a functional group capable of forming a covalent bond with a hydroxyl group and another polymerizable compound will be described.

The polymerizable compound is not particularly limited, as long as the polymerizable compound forms a polymer (resin) by polymerization. The polymerizable compound may be appropriately selected from known polymerizable compounds according to a purpose, but the polymerizable compound preferably includes at least one functional group that is polymerizable by radical polymerization.

Suitable examples of the polymerizable compound include, but are not limited to, compounds that are polymerizable by radical polymerization such as monofunctional, difunctional, and trifunctional or higher functional radical-polymerizable monomers, and radical-polymerizable oligomers; and functional monomers and functional oligomers further including functional groups other than a polymerizable functional group. Among these compounds, difunctional or higher radical-polymerizable compounds are preferred.

The polymerizable group of the polymerizable compound is preferably at least one group among a (meth)acryloyl group and a vinyl group.

It is preferable that the polymerizable compound initiates a polymerization reaction by heat or light.

The polymerizable compound polymerizes to form a resin, and forms a porous resin depending on the composition and the characteristics of the liquid composition.

The resin formed by the polymerizable compound is preferably a resin including a structure body having a network shape formed by application of active energy rays (for example, light irradiation or heat) and the like. Suitable examples of the resin formed by the polymerizable compound include, but are not limited to, acrylate resins, methacrylate resins, urethane acrylate resins, vinyl ester resins, unsaturated polyester resins, epoxy resins, oxetane resins, vinyl ether resins, and resins formed by ene-thiol reactions.

Among these resins, acrylate resins, methacrylate resins, and urethane acrylate resins, which are resins formed from a polymerizable compound having a (meth)acryloyl group are more preferable, because if these resins are used, it is easy to form a structure body by utilizing radical polymerization that has high reactivity. From the viewpoint of productivity, among these resins, it is more preferable to use vinyl ester resins, which are resin formed from a polymerizable compound having a vinyl group.

Each of these resins may be used alone or in combination with others. If two or more resins are used in combination, the combination of the polymerizable compounds is not particularly limited and may be appropriately selected according to a purpose. Preferred examples of the resins include a combination of a urethane acrylate resin as a main component with another resin, for the purpose of imparting flexibility. A polymerizable compound having at least one group among an acryloyl group and a methacryloyl group is referred to as a polymerizable compound having a (meth)acryloyl group.

The active energy rays are not particularly limited and may be appropriately selected according to a purpose, as long as such active energy rays can impart sufficient energy for the polymerization reaction of the polymerizable compound in the liquid composition. Example of the active energy rays include, but are not limited to, ultraviolet rays, electron beams, α-rays, β-rays, γ-rays, and X-rays. Among these active energy rays, ultraviolet rays are preferred. In particular, if a light source having high energy is used, the polymerization reaction may proceed without using a polymerization initiator.

The content of the polymerizable compound is preferably 5.0 mass% or more and 70.0 mass% or less, more preferably 10.0 mass% or more and 50.0 mass% or less, and even more preferably 20.0 mass% or more and 40.0 mass% or less, with respect to the total amount of the liquid composition.

The content of the polymerizable compound is preferably 70.0 mass% or less, because in this case, the size of the pores in the obtained porous body is not excessively small, such as several nm or less, the porous body has an appropriate porosity, and it is possible to suppress a decrease in the permeability of liquids and gases. The content of the polymerizable compound is preferably 5.0% by mass or more, because in this case, a three-dimensional network structure of the resin is sufficiently formed, so that the porous structure is sufficiently obtained, and the strength of the obtained porous structure also tends to improve.

The polymerizable compound preferably contains a polymerizable compound having a hydroxyl group. When the polymerizable compound contains a polymerizable compound having a hydroxyl group, it is possible to obtain a porous resin having excellent porosity and high strength.

Examples of methods of obtaining a porous resin having high strength include, but are not limited to, a method of increasing the content of a polymerizable compound in a liquid composition for forming the porous resin. However, in such a case, even though the crosslink density of the entire porous resin can be improved, there are problems such as a decrease in the porosity of the porous resin and a deterioration of the permeability of liquids and gases. In particular, if the porous resin is used as a separator layer for batteries, the battery characteristics tend to deteriorate.

On the other hand, when a polymerizable compound having a hydroxyl group is used, a covalent bond can be formed between the hydroxyl group and a functional group capable of forming a covalent bond with a hydroxyl group, inside or on the surface of a resin skeleton of the porous resin. Therefore, a porous resin having high strength can be obtained without increasing the content of the polymerizable compound and without clogging the voids inside the porous resin. In other words, the content of the polymerizable compound does not need to be increased, so that a porous resin having excellent porosity and high strength can be obtained.

In particular, in battery applications such as power storage elements including batteries and power generation elements including fuel cells, if the porous resin is formed into an insulating layer on an electrode as a base material, the insulating layer can be formed into a thin film.

In general, when the porous resin is formed into a thin film, the mechanical strength is lower than in a thick film. In the insulating layer, the porous resin is easily deformed by an external impact or pressure inside the element, and thus, it is not possible to maintain the insulating properties and ensure the original function of a separator. However, according to the present embodiment, it is possible to obtain a porous resin having sufficiently high mechanical strength, so that even in a thin film, the function of the porous resin can be sufficiently obtained.

When the insulating layer is formed into a thin film, the distance between electrodes is shortened. Therefore, the electrical resistance (internal resistance) in the battery decreases, and it is possible to obtain high battery performance such as input and output characteristics.

Further, if the insulating layer is formed into a thin film, an increase in the capacity and a reduction of the size of the battery can be expected.

The strength of the porous resin formed on the base material can be evaluated by a mandrel bend test, for example.

Specifically, a cylindrical mandrel bend tester (manufactured by Cortec Co., Ltd.) equipped with a cylindrical mandrel having a diameter of 4 mm is used to perform a bending test 20 times, and a sample can be evaluated by observing whether cracks are formed and whether the insulating properties change before and after the test. To check whether cracks are formed, the sample is inspected visually and by using an optical microscope. The insulating properties can be evaluated as follows. A negative electrode including an insulating layer of 100 square millimeters or a negative electrode cut into 80 square millimeters on a positive electrode is pressed so that edge portions do not overlap, and a DC resistance value between the two electrode bases is measured by using a tester.

At this time, it is preferable that there are no cracks, that the DC resistance value does not change before and after the bending test, and that the DC resistance value is 40 MΩ or more.

«Polymerizable Compound Having Functional Group Forming Covalent Bond with Hydroxyl Group»

The polymerizable compound having a functional group capable of forming a covalent bond with a hydroxyl group includes a functional group capable of forming a covalent bond with a hydroxyl group, and may further include other functional groups, if desired.

The polymerizable compound having a functional group capable of forming a covalent bond with a hydroxyl group polymerizes to form a resin, preferably together with another polymerizable compound, and forms a porous resin depending on the composition and the characteristics of the liquid composition.

If the liquid composition contains the polymerizable compound having a functional group capable of forming a covalent bond with a hydroxyl group, a hydroxyl group on the base material and the functional group can react to form a covalent bond, and thus, the interlayer adhesion between the base material and the porous resin can be enhanced.

In particular, in battery applications such as power storage elements including batteries and power generation elements including fuel cells, if the porous resin is formed into an insulating layer on an electrode as a base material, the interlayer adhesion between the base material and the porous resin increases. Therefore, it is possible to suppress deformation due to an external impact and pressure in the element, and suppress the occurrence of a short circuit due to deviation when foreign matter such as a metal piece penetrates between the porous structure body and the base material.

The interlayer adhesion between the base material and the porous resin can be evaluated by measuring the peel strength, for example. Specifically, the peel strength may be evaluated as follows. An adhesive tape is attached to the porous film and peeled off. Subsequently, the cross section is observed by SEM to confirm the site of the peeled surface resulting when the adhesive tape is peeled off.

At this time, it is preferable that at least part of the peeling occurs outside the interface within the porous resin layer, and more preferably, the entire surface of the peeling surface is formed outside the interface within the porous resin layer.

The functional group capable of forming a covalent bond with a hydroxyl group is a functional group capable of forming a covalent bond by reacting with a hydroxyl group, and preferably is at least one group selected from an isocyanate group, a carbodiimide group, an epoxy group, an alkoxysilyl group, a silanol group, and an oxazoline group, and is more preferably an isocyanate group.

Further, as will be described later, a blocked functional group capable of forming a covalent bond with a hydroxyl group also functions as a functional group capable of forming a covalent bond with a hydroxyl group, if the blocking agent is desorbed. A blocked functional group capable of forming a covalent bond with a hydroxyl group can also be suitably used as the functional group capable of forming a covalent bond with a hydroxyl group, and among these functional groups, blocked isocyanate groups are preferred.

As the polymerizable compound having a functional group capable of forming a covalent bond with a hydroxyl group, an isocyanate compound having an isocyanate group is preferable, and suitable examples thereof include, but are not limited to, tolylene diisocyanate, xylylene diisocyanate, hexamethylene diisocyanate, and isophorone diisocyanate.

The polymerizable compound having a functional group capable of forming a covalent bond with a hydroxyl group is preferably an isocyanate compound, because such a compound has good reactivity with the hydroxyl group. In particular, if the liquid composition is used for a battery, the isocyanate group has high reactivity, so that an effect can be exhibited even if a small amount of the isocyanate compound is added, and the battery characteristics are unlikely to be affected, which is preferable.

In the present embodiment, when the liquid composition on a base material is polymerized to form a porous resin, a porous resin is formed that has excellent adhesiveness to the base material and excellent substance permeability.

It is considered that the adhesiveness is achieved by the formation of a covalent bond between the polymerizable compound having a functional group capable of forming a covalent bond with a hydroxyl group and a hydroxyl group contained in the base material. That is, it is considered that the formation of a series of crosslinked structures coupling the base material and the porous resin strengthens the adhesion between the layers.

The content of the polymerizable compound contributes to a skeleton-type structure (such as strength and capacity) of the porous resin. Among these characteristics, the content of the polymerizable compound having a functional group capable of forming a covalent bond with a hydroxyl group and the ratio with respect to the polymerizable compound contribute to the skeleton-type structure of the porous resin, and also contribute to the reactivity with a hydroxyl group on the base material and the adhesiveness between the base material and the porous resin.

The content of the polymerizable compound having a functional group capable of forming a covalent bond with a hydroxyl group and the ratio with respect to the polymerizable compound are not particularly limited and may be appropriately selected according to a purpose, as long as the characteristics of the compounds can be secured. For example, a hydroxyl value of the hydroxyl group on the base material where the porous resin is to be formed, can be measured by the following method, to set an appropriate numerical range for a ratio between a functional group that is included in the polymerizable compound and can form a covalent bond with a hydroxyl group and a hydroxyl group on the base material where the porous resin is to be formed.

Specifically, the hydroxyl value can be measured by XPS or FT-IR, and can be used as an indicator of the content of the hydroxyl group on the base material.

The ratio (A/B, molar conversion ratio) between a functional group (A) capable of forming a covalent bond with a hydroxyl group and a hydroxyl group (B) contained on the base material or in the base material is preferably 0.1 or more, more preferably 0.5 or more.

If the ratio is 0.1 or more, it is possible to form a large number of bonds between the functional group (A) capable of forming a covalent bond with a hydroxyl group and the hydroxyl group (B), and thus, the interlayer adhesion of a laminated body can be further enhanced.

The content of the polymerizable compound having a functional group capable of forming a covalent bond with a hydroxyl group is preferably 0.05 mass% or more, more preferably 0.1 mass% or more, and even more preferably 0.3 mass% or more, with respect to the total amount of the liquid composition.

If the content of the polymerizable compound is 0.05 mass% or more, it is possible to obtain a liquid composition by which a large number of bonds can be formed between the functional group (A) capable of forming a covalent bond with a hydroxyl group and the hydroxyl group (B), and thus, the interlayer adhesion of the laminated body can be further enhanced.

The ratio of the polymerizable compound having a functional group capable of forming a covalent bond with a hydroxyl group is not particularly limited and may be appropriately selected according to a purpose. The ratio may be 100 mass%, however, the ratio is preferably 0.05 mass% or more, more preferably 0.1 mass% or more, and even more preferably 0.3 mass% or more, with respect to the total amount of the polymerizable compounds.

If there is a large number of functional groups capable of forming a covalent bond with hydroxyl groups in the liquid composition, the storage life of the liquid composition may be significantly reduced, depending on the composition and the storage environment of the liquid composition. Therefore, as long as the storage life of the liquid composition is not affected and the formation of pores after the polymerization of the liquid composition is not hindered, the functional groups capable of forming a covalent bond with hydroxyl groups may be excessively contained.

On the other hand, if the ratio of the polymerizable compound is 0.05 mass% or more, a liquid composition by which a large number of bonds can be formed between the functional group (A) capable of forming a covalent bond with a hydroxyl group and the hydroxyl group (B) is obtained, and thus, the interlayer adhesion of the laminated body can be enhanced.

- Polymerizable Compound Having Blocked Functional Group Forming Covalent Bond with Hydroxyl Group -

In the polymerizable compound having a functional group capable of forming a covalent bond with a hydroxyl group, the functional group capable of forming a covalent bond with a hydroxyl group may be blocked (protected) with a blocking agent. Thus, the functional group capable of forming a covalent bond with a hydroxyl group has no reactivity, and then, after the blocking agent is desorbed by an external stimulus, the reactivity of the functional group capable of forming a covalent bond with a hydroxyl group can be expressed. An example of the external stimulus is a stimulus originating from heat.

The reactivity of the functional group may be implemented by a desorption reaction of the blocking agent. For example, similarly to an equilibrium reaction of a transesterification reaction, the equilibrium may be shifted by the external stimulus, and the desired desorption and polymerization may proceed sequentially.

The blocking agent is not particularly limited, and a known protective group and the like may be appropriately selected according to a purpose. However, the blocking agent is preferably a thermally dissociable blocking agent that can be desorbed by heat.

Examples of the polymerizable compound having a functional group capable of forming a covalent bond with a hydroxyl group and is blocked by a blocking agent include, but are not limited to, a blocked isocyanate compound in which a terminal isocyanate group of the isocyanate compound is protected by a blocking agent.

Examples of blocking agents that block (protect) the isocyanate group as a functional group capable of forming a covalent bond with a hydroxyl group include, but are not limited to, oximes, lactams, phenols, active methylene species, pyrazoles, mercaptans, imidazoles, amines, imines, triazoles, hydroxylamines, and aliphatic, alicyclic, or aromatic alkyl monoalcohols.

The terminal isocyanate group of the isocyanate compound is highly reactive and readily reacts with the active hydroxyl group. If the functional group capable of forming a covalent bond with a hydroxyl group is protected by a blocking agent, it is possible to suppress a reaction between active hydroxyl groups present in the liquid composition and the isocyanate compound. Therefore, it is possible to add a liquid including an active hydroxyl group to the liquid composition in advance. The risk of self-curing of the liquid composition can also be suppressed, so that the storage stability of the liquid composition is also improved.

If a thermally dissociable blocking agent is used, it is considered that, in a polymerization step and a heating step in a process of forming a porous resin by polymerization-induced phase separation described later, the blocking agent thermally dissociates and the functional group forms a covalent bond with an active hydroxyl group present on a surface of the base material, so that high adhesiveness to the base material can be achieved.

If the porous resin is used as an insulating layer for a power storage element or a power generation element, the boiling point of the thermally dissociated blocking agent is preferably 160°C or lower, and more preferably 120°C or lower.

When the boiling point is 160°C or lower, the thermally dissociated blocking agent can be removed, for example, in a thermal dehydration step when manufacturing the power storage element. When the boiling point is 120°C or less, the thermally dissociated blocking agent can be removed in the heating step for removing a liquid contained in the liquid composition according to the present embodiment. By removing the blocking agent, the residual amount of the blocking agent inside the power storage element is reduced, and thus, it is possible to suppress a deterioration of the battery characteristics due to a reaction between the blocking agent and an electrode material such as an electrolytic solution, for example.

The residual amount of the blocking agent inside the power storage element after the heating step for removing the liquid is not particularly limited, as long as a deterioration of the battery characteristics can be suppressed. However, the residual amount of the blocking agent is preferably 30 $\mu$g/cm$^2$ or less, more preferably 10 $\mu$g/cm$^2$ or less, even more preferably 5 $\mu$g/cm$^2$ or less, and particularly preferably 0 $\mu$g/cm$^2$ (no blocking agent being contained).

[Method for Measuring Residual Amount of Blocking Agent]

The residual amount of the blocking agent can be measured by the following procedure.

Pieces of the porous resin formed to have an average thickness of 20 $\mu$m on both sides of a metal foil are punched out by using a hand punching device having a diameter of 16 mm to prepare five samples.

The five samples are immersed in 2 mL of an extraction solvent such as ethanol, and extracted for 1 hour using an ultrasonic cleaning device. The extracted liquid is filtered through a polytetrafluoroethylene (PTFE) filter having an average pore size of 0.2 $\mu$m, and the blocking agent is quantitatively analyzed by using a liquid chromatography-mass spectrometer (LC-MS). The content of the blocking agent per area of the porous film (unit: $\mu$g/cm$^2$) is calculated, and the residual amount of the blocking agent is determined as an average value of the five samples.

Alternatively, when measuring the residual amount of the blocking agent in a porous resin in a power storage element as a final product, a plurality of samples are prepared by using a hand punching device having a diameter of 16 mm to punch out pieces from a metal foil on which the porous resin is laminated, and the residual amount of the blocking agent can be determined similarly as described above. If the total average thickness of the porous resin is different from 40 $\mu$m (20 $\mu$m on each side), the residual amount of the blocking agent can be determined by converting a value obtained at the total average thickness of 40 $\mu$m.

<<Other Polymerizable Compounds>>

The other polymerizable compound is a polymerizable compound other than the polymerizable compound having a functional group capable of forming a covalent bond with a hydroxyl group, is a polymerizable compound not including a functional group capable of forming a covalent bond with a hydroxyl group, and may further include other functional groups, if desired.

Examples of the monofunctional radical-polymerizable compounds include, but are not limited to, 2-(2-ethoxyethoxy)ethyl (meth)acrylate, methoxy polyethylene glycol mono(meth)acrylate, methoxy polyethylene glycol mono(meth)acrylate, phenoxy polyethylene glycol (meth)acrylate, 2-acryloyloxyethyl succinate, 2-ethylhexyl (meth)acrylate, 2-hydroxyethyl (meth)acrylate, 2-hydroxypropyl (meth)acrylate, tetrahydrofurfuryl (meth)acrylate, 2-ethylhexyl carbitol (meth)acrylate, 3-methoxybutyl (meth)acrylate, benzyl (meth)acrylate, lauryl (meth)acrylate, tridecyl (meth)acrylate, isobornyl (meth)acrylate, isooctyl (meth)acrylate, cyclohexyl (meth)acrylate, isoamyl (meth)acrylate, isobutyl (meth)acrylate, methoxy triethylene glycol (meth)acrylate, phenoxy tetraethylene glycol (meth)acrylate, cetyl (meth)acrylate, isostearyl (meth)acrylate, stearyl (meth)acrylate, and styrene monomers. Each of these compounds may be used alone or in combination with others.

Examples of the difunctional radical-polymerizable compounds include, but are not limited to, 1,3-butanediol di(meth)acrylate, 1,4-butanediol di(meth)acrylate, 1,6-hexanediol di(meth)acrylate, diethylene glycol di(meth)acrylate, polyethylene glycol di(meth)acrylate, neopentyl glycol di(meth)acrylate, EO-modified bisphenol A di(meth)acrylate, EO-modified bisphenol F di(meth)acrylate, neopentyl glycol di(meth)acrylate, and tricyclodecane dimethanol di(meth)acrylate. Each of these compounds can be used alone or in combination with others.

Examples of the trifunctional or higher radical-polymerizable compounds include, but are not limited to, trimethylolpropane tri(meth)acrylate (TMPTA, TMPTM), EO-modified trimethylolpropane tri(meth)acrylate, PO-modified trimethylolpropane tri(meth)acrylate, caprolactone-modified trimethylolpropane tri(meth)acrylate, HPA-modified trimethylolpropane tri(meth)acrylate, pentaerythritol tri(meth)acrylate, pentaerythritol tetra(meth)acrylate (PETTA, PETTM), glycerol tri(meth)acrylate, ECH-modified glycerol tri(meth)acrylate, EO-modified glycerol tri(meth)acrylate, PO-modified glycerol tri(meth)acrylate, tris(acryloxyethyl) isocyanurate, dipentaerythritol hexa(meth)acrylate (DPHA), caprolactone-modified dipentaerythritol hexa(meth)acrylate, dipentaerythritol hydroxypenta(meth)acrylate, alkyl-modified dipentaerythritol penta(meth)acrylate, alkyl-modified dipentaerythritol tetra(meth)acrylate, alkyl-modified dipentaerythritol tri(meth)acrylate, dimethylolpropane tetra(meth)acrylate (DTMPTA, DTMPTM), pentaerythritol ethoxytetra(meth)acrylate, EO-modified phosphate tri(meth)acrylate, and 2,2,5,5-tetrahydroxymethylcyclopentanone tetra(meth)acrylate. Each of these compounds can be used alone or in combination with others.

<Liquid>

The liquid contains porogen and further, if desired, a liquid other than porogen.

The porogen is a liquid that is compatible with the polymerizable compound and is incompatible (causes phase separation) with a polymer (resin) in the process of polymerizing the polymerizable compound in the liquid composition. If the liquid composition contains the porogen, a porous resin is formed when the polymerizable compound is polymerized. It is also preferable that a compound that generates a radical or an acid by light or heat (a polymerization initiator described later) can be dissolved in the liquid composition.

The liquid and the porogen can be used alone or in combination with others.

In the present embodiment, the liquid is not polymerizable.

The boiling point of one type of porogen alone or the boiling point of two or more types of porogen in combination is preferably 50°C or higher and 250°C or lower, more preferably 70°C or higher and 200°C or lower, and even more preferably 120°C or higher and 190°C or lower, at normal pressure. When the boiling point is 50°C or higher, the evaporation of porogen is suppressed at a temperature near room temperature, and thus, it is easy to handle the liquid composition and it is easy to control the content of porogen in the liquid composition. When the boiling point is 250°C or lower, the time required for a step of removing the porogen after polymerization is shortened, and the productivity of the porous resin is improved. In addition, it is possible to reduce the amount of porogen remaining inside the porous resin, and thus, when the porous resin is utilized as a functional layer such as a substance separation layer that separates substances or a reaction layer serving as a reaction field, quality improves.

Examples of the porogen include, but are not limited to, ethylene glycol species such as diethylene glycol monomethyl ether, ethylene glycol monobutyl ether, ethylene glycol monoisopropyl ether, and dipropylene glycol monomethyl ether; esters such as γ-butyrolactone and propylene carbonate; and amides such as N,N-dimethylacetamide. Examples of the porogen further include liquids having relatively high molecular weight, such as methyl tetradecanoate, methyl decanoate, methyl myristate, and tetradecane. Examples of the porogen further include liquids such as acetone, 2-ethylhexanol, and 1-bromonaphthalene.

In some cases, the above-described liquids may not generally serve as porogen.

As described above, porogen is a liquid compatible with the polymerizable compound and is incompatible (causes phase separation) with the resulting polymer (resin) in the process of polymerizing the polymerizable compound in the liquid composition. In other words, whether or not a liquid serves as a porogen depends on the relationship between the polymerizable compound and the polymer (the resin formed by polymerization of the polymerizable compound).

It is sufficient for the liquid composition to contain at least one type of porogen having the above-described specific relationship with the polymerizable compound. Therefore, the selectable range of materials for preparing the liquid composition is widened, and it is easy to design the liquid composition. As the selectable range of materials for preparing the liquid composition is widened, the liquid composition can provide a wide range of applications in response to requirements for characteristics of the liquid composition other than the capability of forming a porous structure.

For example, if the liquid composition is discharged by an inkjet method, the characteristics of the liquid composition preferably include discharge stability and the like as a characteristic other than the capability of forming a porous structure. In this case, the selectable range of materials is wide, so that it is easy to design the liquid composition.

The content of the liquid or the porogen is preferably 30.0 mass% or more and 95.0 mass% or less, more preferably 50.0 mass% or more and 90.0 mass% or less, and even more preferably 60.0 mass% or more and 80.0 mass% or less, with respect to the total amount of the liquid composition.

The content of the liquid or the porogen is preferably 30.0 mass% or more, because in this case, the size of the pores in the obtained porous body is not excessively small, such as several nm or less, the porous body has an appropriate porosity, and it is possible to suppress a decrease in the permeability of liquids and gases. The content of the liquid and the porogen is preferably 95.0% by mass or less, because in this case, a three-dimensional network structure of the resin is sufficiently formed, so that the porous structure is sufficiently obtained, and the strength of the obtained porous structure also tends to improve.

As described above, it is sufficient for the liquid composition to contain at least one type of porogen having the above-described specific relationship with the polymerizable compound, and thus, the liquid composition may additionally contain another liquid (a liquid other than the porogen) not having the above-described specific relationship with the polymerizable compound.

The content of the other liquid is preferably 10.0 mass% or less, more preferably 5.0 mass% or less, even more preferably 1.0 mass% or less, and particularly preferably 0 mass% (the other liquid is not contained), with respect to the total amount of the liquid composition.

The mass ratio between the content of the polymerizable compound and the content of the porogen (polymerizable compound : porogen) in the liquid composition is preferably from 1.0: 0.4 to 1.0: 19.0, more preferably from 1.0: 1.0 to 1.0: 9.0, and even more preferably from 1.0: 1.5 to 1.0: 4.0.

A component in the liquid composition other than the polymerizable compound having a functional group capable of forming a covalent bond with a hydroxyl group preferably does not react with the functional group capable of forming a covalent bond with a hydroxyl group. That is, the component is preferably a component having no hydroxyl group. Thus, it is possible to mix the polymerizable compound and the component in advance. The risk of self-curing of the polymerizable compound can also be suppressed, so that the storage stability of the liquid composition is also improved.

If the functional group capable of forming a covalent bond with a hydroxyl group is an isocyanate group, the component preferably does not include a functional group that reacts with the isocyanate group, that is, the component preferably does not include a hydroxyl group, a carbonyl group, and an amino group.

Examples of the component having no hydroxyl group include esters such as γ-butyrolactone and propylene carbonate; amides such as N,N-dimethylacetamide; liquids having relatively high molecular weight, such as methyl tetradecanoate, methyl decanoate, methyl myristate, and tetradecane; acetone, and 1-bromonaphthalene that may be used as a solvent.

If the polymerizable compound having a functional group capable of forming a covalent bond with a hydroxyl group and is blocked by a blocking agent is used, the liquid or the component is not particularly limited and may be appropriately selected according to a purpose, and it is also possible to use a liquid or a component having a hydroxyl group. Thus, it is possible to mix the polymerizable compound and the liquid or the component in advance. The risk of self-curing of the polymerizable compound can also be suppressed, so that the storage stability of the liquid composition is also improved.

Examples of the liquid having a hydroxyl group include, but are not limited to, ethylene glycol species such as diethylene glycol monomethyl ether, ethylene glycol monobutyl ether, ethylene glycol monoisopropyl ether, and dipropylene glycol monomethyl ether.

<Other Components>

«Polymerization Initiator»

The liquid composition may contain other components such as a polymerization initiator.

The polymerization initiator is a material that can generate active species such as radicals and cations by energy such as light and heat to initiate polymerization of a polymerizable compound. Examples of polymerization initiators include, but are not limited to, known radical polymerization initiators, cationic polymerization initiators, and base generators. Each of these polymerization initiators can be used alone or in combination with others. Among these polymerization initiators, photoradical polymerization initiators are preferred.

The photoradical polymerization initiator is not particularly limited, and a known photoradical generator can be appropriately selected according to a purpose. Examples of the photoradical polymerization initiator include, but are not limited to, photoradical polymerization initiators and acetophenone derivatives such as Michler's ketone and benzophenone known under the product names IRGACURE and DAROCUR.

Specific examples of the compound include, but are not limited to, α-hydroxyacetophenone or α-aminoacetophenone, 4-aroyl-1,3-dioxolane, benzyl ketal, 2,2-diethoxyacetophenone, p-dimethylaminoacetophen, p-dimethylaminopropiophenone, benzophenone, 2-chlorobenzophenone, pp'-dichlorobenzophene, pp'-bisdiethylaminobenzophenone, Michler's ketone, benzyl, benzoin, benzyl dimethyl ketal, tetramethylthiuram monosulfide, thioxanthone, 2-chlorothioxanthone, 2-methylthioxanthone, azobisisobutyronitrile, benzoin peroxide, di-tert-butyl peroxide, 1-hydroxycyclohexyl phenyl ketone, 2-hydroxy-2-methyl-1-phenyl-1-one, 1-(4-isopropylphenyl)-2-hydroxy-2-methylpropan-1-one, methyl benzoyl formate, benzoin isopropyl ether, benzoin methyl ether, benzoin ethyl ether, benzoin ether, benzoin isobutyl ether, benzoin n-butyl ether, benzoin n-propyl, 1-hydroxy-cyclohexyl-phenyl-ketone, 2-benzyl-2-dimethylamino-1-(4-morpholinophenyl)-butanone-1,1-hydroxy-cyclohexyl-phenyl-ketone, 2,2-dimethoxy-1,2-diphenylethan-1-one, bis(η5-2,4-cyclopentadien-1-yl)-bis(2,6-difluoro-3-(1H-pyrrol-1-yl)-phenyl)titanium, bis(2,4,6-trimethylbenzoyl)-phenylphosphine oxide, 2-methyl-1[4-(methylthio)phenyl]-2-morpholinopropan-1-one, 2-hydroxy-2-methyl-1-phenyl-propan-1-one (DAROCUR 1173), bis(2,6-dimethoxybenzoyl)-2,4,4-trimethyl-pentylphosphine oxide, 1-[4-(2-hydroxyethoxy)-phenyl]-2-hydroxy-2-methyl-1-propan-1-one monoacylphosphine oxide, bisacylphosphine oxide; titanocene, fluorescein, anthraquinone, thioxanthones; xanthones, lophine dimer, trihalomethyl compounds; dihalomethyl compounds, active ester compounds, and organoboron compounds.

Further, photo-crosslinking radical generators such as bisazide compounds may be used at the same time. In the case of polymerization only by heat, thermal polymerization initiators such as azobisisobutyronitrile (AIBN), which is a typical radical generator, can be used.

To obtain a sufficient curing speed, the content of the polymerization initiator is preferably 0.05 mass% or more and 10.0 mass% or less, and more preferably 0.5 mass% or more and 5.0 mass% or less, when the total mass of the polymerizable compound is 100.0 mass%.

The liquid composition may be a non-dispersed composition containing no dispersed material in the liquid composition or a dispersed composition containing dispersed material in the liquid composition, but is preferably a non-dispersed composition.

[Polymerization-Induced Phase Separation]

The porous resin is formed by polymerization-induced phase separation. The polymerization-induced phase separation refers to a state where the porogen is compatible with the polymerizable compound, but becomes incompatible (phase-separated) with the polymer (resin) generated in the process of polymerizing the polymerizable compound. Among existing methods for obtaining a porous body by phase separation, the polymerization-induced phase separation method advantageously produces a porous body having a network structure, and thus, the porous body can be expected to have high resistance to chemicals and heat. Further advantageously, as compared with other methods, the process time is shorter and the surface modification is easier.

Next, a process of forming a porous resin by polymerization-induced phase separation by using a liquid composition containing a polymerizable compound will be described. The polymerizable compound undergoes a polymerization reaction by irradiation with light or the like to form a resin. During this process, the solubility of the polymerizable compound in the growing resin with respect to the porogen decreases to cause phase separation between the resin and the porogen. Eventually, in the resin, porogen and the like fills the holes and the resin forms a porous structure having a co-continuous structure from the resin skeleton. When the structure is dried, the porogen and the like are removed, and a porous resin having a co-continuous three-dimensional network structure remains. Therefore, to form a porous resin having an appropriate porosity, the compatibility between the porogen and the polymerizable compound and the compatibility between the porogen and the resin formed by the polymerization of the polymerizable compound are examined.

Here, the liquid composition contains a polymerizable compound having a functional group capable of forming a covalent bond with a hydroxyl group. Therefore, in the above-described process, a resin having a functional group capable of forming a covalent bond with a hydroxyl group is formed, and the functional group capable of forming a covalent bond with a hydroxyl group forms a covalent bond with a hydroxyl group. The functional group capable of forming a covalent bond with a hydroxyl group may form a covalent bond with a hydroxyl group included in the base material, or may form a covalent bond with another substituent included in the polymerizable compound.

The polymerizable compound having a functional group capable of forming a covalent bond with a hydroxyl group may be a compound in which the reactivity of the functional group capable of forming a covalent bond with a hydroxyl group is inactivated by causing the functional group capable of forming a covalent bond with a hydroxyl group to react with a blocking agent.

The blocking agent has a property in which, after bonding with the polymerizable compound, the blocking agent can desorb from the polymerizable compound by an external stimulus originating from heat, for example. After the polymerizable compound reacts with the blocking agent, it is possible to additionally perform a desorption step by heat or the like to re-activate the functional group capable of forming a covalent bond with a hydroxyl group. Therefore, in the process of forming a resin by polymerization, it is possible to block the reactivity of a functional group capable of forming a covalent bond with a hydroxyl group, and after the polymerization, form a covalent bond with a hydroxyl group on the base material or a hydroxyl group contained in the liquid composition.

[Light Transmittance]

The light transmittance at a wavelength of 550 nm measured while stirring the liquid composition is 30% or more.

The compatibility between the porogen and the polymerizable compound can be determined from the light transmittance.

If the light transmittance is 30% or more, it is determined that the liquid contains the porogen and the polymerizable compound and the porogen are compatible. If the light transmittance is less than 30%, it is determined that the polymerizable compound and the liquid are incompatible.

Specifically, the light transmittance can be measured by a method described below.

First, the liquid composition is injected into a quartz cell. Next, the transmittance of light (visible light) of the liquid composition at a wavelength of 550 nm is measured under the following conditions while stirring the liquid composition by using a stirrer at 300 rpm.

- Quartz cell: Special micro cell with screw cap (product name: M25-UV-2, manufactured by GL Sciences Inc.)
- Transmittance measurement device: USB4000, manufactured by Ocean Optics, Inc.
- Stirring speed: 300 rpm

- Measurement wavelength: 550 nm
- Reference: Light transmittance at a wavelength of 550 nm measured and acquired when quartz cell is filled with air (transmittance: 100%)

[Increase Rate of Haze Value]

The increase rate of the haze value in a haze measuring element prepared by polymerizing the liquid composition is 1.0% or more.

The compatibility between the porogen and the resin formed by polymerizing the polymerizable compound can be determined from the increase rate of the haze value.

If the increase rate of the haze value is 1.0% or more, it is determined that the liquid includes the porogen and the resin and the porogen are incompatible. If the increase rate of the haze value is less than 1.0%, it is determined that the resin and the liquid are compatible.

The haze value in the haze measuring element increases as the compatibility between the porogen and the resin formed by polymerization of the polymerizable compound decreases. By contrast, the haze value decreases as the compatibility increases. A higher haze value indicates that the resin formed by polymerization of the polymerizable compound is more likely to form a porous structure.

Specifically, the increase rate of the haze value is the increase rate of the haze value before and after the polymerization of a haze measuring element having an average thickness of 100 $\mu$m manufactured when the liquid composition is polymerized to form the porous resin. The increase rate of the haze value is measured by the method described below.

- Preparation of Haze Measuring Element -

First, on a non-alkali glass substrate, fine resin particles are uniformly dispersed as a gap agent on the substrate by spin coating. Subsequently, a substrate coated with the gap agent and a non-alkali glass substrate not coated with the gap agent are attached to each other so that the surface coated with the gap agent is sandwiched. Next, the liquid composition is filled into the space between the attached substrates by utilizing a capillary phenomenon, to prepare a "pre-UV irradiation haze measuring element". Subsequently, the pre-UV irradiation haze measuring element is irradiated with UV light to cure the liquid composition. Finally, the peripheries of the substrates are sealed with a sealing agent, to prepare a "UV-irradiated haze measuring element". The size of the gap agent (an average particle diameter of 100 $\mu$m) corresponds to the average thickness of the haze measuring element. Various examples of preparation conditions are described below.

- Non-alkali glass substrate: OA-10G, manufactured by Nippon Electric Glass Co., Ltd., 40 mm, t = 0.7 mm
- Gap agent: Fine resin particles MICROPEARL GS-L100, manufactured by Sekisui Chemical Co., Ltd., average particle diameter of 100 $\mu$m
- Spin coating conditions: dispersion droplet amount of 150 $\mu$L, rotation speed of 1000 rpm, rotation time 30 s
- Amount of liquid composition being filled: 160 $\mu$L
- UV irradiation conditions: UV-LED used as light source, light source wavelength of 365 nm, irradiation intensity 30 mW/cm$^2$, irradiation time 20 s
- Sealing agent: TB3035B (manufactured by ThreeBond Group)

- Measurement of Haze Value (Haze) -

Next, the prepared pre-UV irradiation haze measuring element and the haze measuring element are used to measure the haze value (haze). The measured value of the pre-UV irradiation haze measuring element is used as a reference value (a haze value of 0) to calculate the increase rate of the measured value (haze value) of the haze measuring element with respect to the measured value of the pre-UV irradiation haze measuring element.

A device used for the measurement is indicated below.

- Haze measurement device: Haze meter NDH 5000, manufactured by NIPPON DENSHOKU INDUSTRIES CO., LTD.

[Viscosity]

From the viewpoint of workability when applying the liquid composition, the viscosity of the liquid composition at 25°C is preferably 1.0 mPa·s or more and 150.0 mPa·s or less, more preferably 1.0 mPa s or more and 30.0 mPa·s or less, and particularly preferably 1.0 mPa·s or more and 25.0 mPa·s or less. When the viscosity of the liquid composition is 1.0 mPa·s or more and 30.0 mPa·s or less, it is possible to obtain good dischargeability, even if the liquid composition is applied to an inkjet method. The viscosity can be measured by using a viscometer (device name: RE-550L, manufactured by TOKI SANGYO Co., Ltd.), for example.

[Hansen Solubility Parameter (HSP)]

The compatibility between the porogen and the polymerizable compound described above and the compatibility between the porogen and the resin formed by polymerization of the polymerizable compound can be estimated from the Hansen solubility parameter (HSP).

The Hansen solubility parameter (HSP) is a useful tool for estimating the compatibility between two substances and is a parameter discovered by Charles M. Hansen. The Hansen solubility parameter (HSP) is expressed by combining the three parameters ($\delta D$, $\delta P$, and $\delta H$) below derived experimentally and theoretically. The unit of the Hansen solubility parameter (HSP) is $MPa^{0.5}$ or $(J/cm^3)^{0.5}$. In the present embodiment, $(J/cm^3)^{0.5}$ is used.

$\delta D$: Energy originating from London dispersion force.
$\delta P$: Energy originating from dipole-dipole interaction.
$\delta H$: Energy originating from hydrogen bonding force.

The Hansen solubility parameter (HSP) is a vector quantity expressed as ($\delta D$, $\delta P$, $\delta H$), and is plotted in a three-dimensional space (a Hansen space) having the three parameters as coordinate axes. The Hansen solubility parameters (HSPs) of generally used substances are available from known information sources such as databases. For example, the Hansen solubility parameter (HSP) of a desired substance can be obtained by referring to a database. For a substance whose Hansen solubility parameter (HSP) is not registered in the database, the Hansen solubility parameter (HSP) can be calculated from a chemical structure of the substance or the Hansen solubility sphere method described later, by using computer software such as "Hansen Solubility Parameters in Practice (HSPiP)".

The Hansen solubility parameter (HSP) of a mixture containing two or more substances is calculated as a vector sum of values obtained by multiplying the Hansen solubility parameter (HSP) of each substance by the volume ratio of each substance with respect to the entire mixture. In the present embodiment, the Hansen solubility parameter (HSP) of a liquid (porogen) obtained from a known information source such as a database is referred to as the "Hansen solubility parameter of a liquid".

A relative energy difference (RED) based on the Hansen solubility parameter (HSP) of a solute and the Hansen solubility parameter (HSP) of a solution is represented by the equation below.

$$\text{Relative Energy Difference (RED)} = \frac{Ra}{Ro} \quad \cdots \quad \text{(Equation)}$$

In the equation above, Ra represents an interaction distance between the Hansen solubility parameter (HSP) of the solute and the Hansen solubility parameter (HSP) of the solution, and Ro represents an interaction radius of the solute. The interaction distance (Ra) between the Hansen solubility parameters (HSPs) indicates a distance between two substances. As the value of the interaction distance (Ra) decreases, the two substances approach each other in a three-dimensional space (Hansen space) and the possibility that the substances dissolve in each other (are compatible) increases.

Assuming that the respective Hansen solubility parameters (HSPs) of the two substances (a solute A and a solution B) have the values mentioned below, Ra can be calculated as follows.

-

$$HSP^A = (\delta D^A, \delta P^A, \delta H^A)$$

-

$$HSP^B = (\delta D^B, \delta P^B, \delta H^B)$$

-

$$Ra = [4 * (\delta D^A - \delta D^B)^2 + (\delta P^A - \delta P^B)^2 + (\delta H^A - \delta H^B)^2]^{1/2}$$

For example, Ro (the interaction radius of the solute) can be determined by the Hansen solubility sphere method described below.

- Hansen Solubility Sphere Method -

First, a substance of which Ro is to be determined and several tens of evaluation liquids having known Hansen solubility parameters (HSPs) (liquids different from the "liquid (porogen)" described above) are prepared, and a compatibility test for determining the compatibility of a target substance with respect to each evaluation liquid is performed. In the compatibility test, the Hansen solubility parameters (HSPs) of evaluation liquids exhibiting compatibility and the Hansen solubility parameters (HSPs) of evaluation liquids exhibiting no compatibility with the substance are plotted on the Hansen space. Based on the plotted Hansen solubility parameters (HSPs) of the evaluation liquids, a virtual spherical body (Hansen sphere) is created in the Hansen space, which includes the Hansen solubility parameters (HSPs) of the group of evaluation liquids exhibiting compatibility but, does not include the Hansen solubility parameters (HSPs) of the group of evaluation liquids exhibiting no compatibility with the substance. The radius of the Hansen sphere corresponds to an interaction radius $R_0$ of the substance, and the center of the Hansen sphere correspond to the Hansen solubility parameter (HSP) of the substance. An evaluator sets the evaluation criteria (criteria for determining whether a substance is compatible) of the compatibility between the substance of which the interaction radius $R_0$ and the Hansen solubility parameter (HSP) are to be determined and each evaluation liquid having a known Hansen solubility parameter (HSP). The evaluation criteria in the present embodiment will be described later.

- Hansen Solubility Parameter (HSP) and Interaction Radius of Polymerizable Compound -

In the present embodiment, the Hansen solubility parameter (HSP) of the polymerizable compound and the interaction radius of the polymerizable compound are determined by the Hansen solubility sphere method. As described above, the evaluation criteria of the compatibility in the Hansen solubility sphere method are set by the evaluator. In the present embodiment, the Hansen solubility parameter (HSP) and the interaction radius of the polymerizable compound determined by the following criteria are represented by a "Hansen solubility parameter C of the polymerizable compound" and an "interaction radius D of the polymerizable compound", respectively. In other words, the "Hansen solubility parameter C of the polymerizable compound" and the "interaction radius D of the polymerizable compound" are obtained based on the Hansen solubility sphere method including the evaluation criteria for the compatibility set by the evaluator, and are different from the "Hansen solubility parameter of the liquid" obtained from a known information source such as a database.

The Hansen solubility parameter C of the polymerizable compound and the interaction radius D of the polymerizable compound are determined by evaluating the compatibility of the polymerizable compound with respect to the evaluation liquid (an evaluation based on the "light transmittance of a transmittance measuring composition at a wavelength of 550 nm, measured while stirring the transmittance measuring composition containing the polymerizable compound and the evaluation liquid"), in accordance with [1-1] described below and the measurement method of the light transmittance described above.

[1-1] Preparation of Transmittance Measuring Composition

First, the polymerizable compound whose Hansen solubility parameter (HSP) is to be determined and several tens of evaluation liquids having known Hansen solubility parameters (HSPs) are prepared, and the polymerizable compound, each evaluation liquid, and a polymerization initiator are mixed in the ratio described below to prepare a transmittance measuring composition. As the several tens of evaluation liquids having known Hansen solubility parameters (HSPs), 21 types of evaluation liquids described below are used.

- Ratio of Transmittance Measuring Composition -

- Polymerizable compound whose Hansen solubility parameter (HSP) is to be determined: 28.0 mass%
- Evaluation liquids having known Hansen solubility parameter (HSP): 70.0 mass%
- Polymerization initiator (IRGACURE 819, manufactured by BASF): 2.0 mass%

- Group of Evaluation Liquids (21 Types) -

Ethanol, 2-propanol, mesitylene, dipropylene glycol monomethyl ether, N-methyl 2-pyrrolidone, γ-butyrolactone, propylene glycol monomethyl ether, propylene carbonate, ethyl acetate, tetrahydrofuran, acetone, n-tetradecane, ethylene glycol, diethylene glycol monobutyl ether, diethylene glycol butyl ether acetate, methyl ethyl ketone, methyl isobutyl ketone, 2-ethylhexanol, diisobutyl ketone, benzyl alcohol, 1-bromonaphthalene

- Hansen Solubility Parameter (HSP) and Interaction Radius of Resin formed by Polymerization of Polymerizable Compound -

The Hansen solubility parameter (HSP) of a resin formed by polymerization of the polymerizable compound and the interaction radius of the resin formed by polymerization of the polymerizable compound are determined by the Hansen solubility sphere method. As described above, the evaluation criteria of the compatibility in the Hansen solubility sphere method are set by the evaluator. In the present embodiment, the Hansen solubility parameter (HSP) of the resin formed by polymerization of the polymerizable compound and the interaction radius of the resin formed by polymerization of the polymerizable compound determined by the following criteria are represented by a "Hansen solubility parameter A of the resin" and an "interaction radius B of the resin", respectively. In other words, the "Hansen solubility parameter A of the resin" and the "interaction radius B of the resin" are obtained based on the Hansen solubility sphere method including the evaluation criteria for the compatibility set by the evaluator, and are different from the "Hansen solubility parameter of the liquid" obtained from a known information source such as a database.

The Hansen solubility parameter A of the resin and the interaction radius B of the resin are determined by evaluating the compatibility of the resin with respect to an evaluation liquid (an evaluation based on an "increase rate of the haze value (haze) in a haze measuring element prepared by using a haze measuring composition containing a polymerizable compound and an evaluation liquid"), in accordance with [2-1] described below and the method of measuring the increase rate of the haze value described above.

[2-1] Preparation of Haze Measuring Composition

First, a resin precursor (polymerizable compound) whose Hansen solubility parameter (HSP) is to be determined and several tens of evaluation liquids having known Hansen solubility parameters (HSPs) are prepared, and the polymerizable compound, each evaluation liquid, and a polymerization initiator are mixed in the ratio described below to prepare a haze measuring composition. As the several tens of evaluation liquids having known Hansen solubility parameters (HSPs), the 21 types of evaluation liquids described below are used.

- Ratio of Haze Measuring Composition -

- Resin precursor (polymerizable compound) whose Hansen solubility parameter (HSP) is to be determined: 28.0 mass%
- Evaluation liquids having known Hansen solubility parameter (HSP): 70.0 mass%
- Polymerization initiator (IRGACURE 819, manufactured by BASF): 2.0 mass%

- Group of Evaluation Liquids (21 Types) -

Ethanol, 2-propanol, mesitylene, dipropylene glycol monomethyl ether, N-methyl 2-pyrrolidone, γ-butyrolactone, propylene glycol monomethyl ether, propylene carbonate, ethyl acetate, tetrahydrofuran, acetone, n-tetradecane, ethylene glycol, diethylene glycol monobutyl ether, diethylene glycol butyl ether acetate, methyl ethyl ketone, methyl isobutyl ketone, 2-ethylhexanol, diisobutyl ketone, benzyl alcohol, 1-bromonaphthalene

- Relative Energy Difference (RED) Based on Hansen Solubility Parameters (HSPs) of Resin and Liquid (Porogen) -

The relative energy difference (RED) is calculated based on Equation 1 below, by using the Hansen solubility parameter A of the resin formed by polymerization of the polymerizable compound, the interaction radius B of the resin, and the Hansen solubility parameter of porogen. The Hansen solubility parameter A of the resin and the interaction radius B of the resin are determined based on the increase rate of the haze value (haze) of the haze measuring element prepared from the haze measuring composition containing the polymerizable compound and the evaluation liquid, as described above. The relative energy difference (RED) is preferably 1.00 or more, more preferably 1.10 or more, even more preferably 1.20 or more, and particularly preferably 1.30 or more.

$$\text{Relative Energy Difference (RED)} = \frac{\text{Distance between "Hansen Solubility Parameter A of resin" and "Hansen Solubility Parameter of solvent"}}{\text{"Interaction Radius B of resin"}} \quad \cdots \text{(Equation 1)}$$

The relative energy difference (RED) based on the Hansen solubility parameters (HSPs) of the resin and the porogen is preferably 1.00 or more, because in this case, the porogen and the resin formed by polymerization of the polymerizable compound in the liquid composition are likely to separate by phase separation, and a porous resin is more likely to be formed.

- Relative Energy Difference (RED) Based on Hansen Solubility Parameters (HSPs) of Polymerizable Compound and Liquid (Porogen) -

The relative energy difference (RED) is calculated based on Equation 2 below, by using the Hansen solubility parameter C of the polymerizable compound determined based on the light transmittance of the transmittance measuring composition at a wavelength of 550 nm, measured while stirring the transmittance measuring composition containing the polymerizable compound and the evaluation liquid, as described above, the interaction radius D of the polymerizable compound determined based on the compatibility of the polymerizable compound with respect to the evaluation liquid, and the Hansen solubility parameter of the liquid. The relative energy difference (RED) is preferably 1.05 or less, more preferably 0.90 or less, even more preferably 0.80 or less, and particularly preferably 0.70 or less.

$$\text{Relative Energy Difference (RED)} = \frac{\text{Distance between "Hansen Solubility Parameter C of polymerizable compound" and "Hansen Solubility Parameter of solvent"}}{\text{"Interaction Radius D of polymerizable compound"}} \quad \cdots \quad (\text{Equation 2})$$

If the relative energy difference (RED) based on the Hansen solubility parameters (HSPs) of the polymerizable compound and the porogen is 1.05 or less, the polymerizable compound and the porogen are more likely to be compatible with each other, and a value closer to 0 indicates that the polymerizable compound and the porogen are more compatible with each other. Therefore, when the relative energy difference (RED) is 1.05 or less, the liquid composition exhibits high dissolution stability such that the polymerizable compound dissolves in the porogen and does not precipitate over time. The polymerizable compound has high solubility in the porogen, so that it is possible to maintain the discharge stability of the liquid composition. Therefore, the liquid composition of the present embodiment can also be suitably applied to a method of discharging a liquid composition such as an inkjet method, for example. Further, when the relative energy difference (RED) is 1.05 or less, the polymerizable compound and the porogen are prevented from separating in the liquid composition in a state before the start of the polymerization reaction, and the formation of an irregular or non-uniform porous resin is suppressed.

[Method of Manufacturing Liquid Composition]

A method of manufacturing the liquid composition is not particularly limited and may be appropriately selected according to a purpose. Preferably, the liquid composition is prepared by a step of dissolving a polymerization initiator in a polymerizable compound, a step of further dissolving a porogen and other components therein, a step of stirring the components to obtain a uniform solution, and the like.

(Storage Container)

A storage container of the present embodiment is a storage container including the above-described liquid composition of the present embodiment and a container, and the liquid composition is accommodated in the container.
Examples of the container include, but are not limited to, glass bottles, plastic containers, plastic bottles, stainless bottles, 18-liter containers, and drum containers.

(Laminated Structure Body)

A laminated structure body of the present embodiment includes a base material and a porous resin formed by polymerizing the above-described liquid composition of the present embodiment on the base material.

<Base Material>

As the base material, any material including a transparent material or an opaque material, can be appropriately selected according to a purpose, as long as the material has hydroxyl groups on the surface.
Examples of transparent base materials include, but are not limited to, glass base materials, resin film base materials such as various types of plastic films, and composite substrates of these materials.

Examples of opaque base materials include, but are not limited to, silicon base materials; metal base materials such as stainless steel, aluminum and copper; a recording medium; and base materials obtained by laminating these materials.

The recording medium may be plain paper, glossy paper, special paper, cloth, or the like, and may be a base material having low permeability (base material having low absorbability). The base material having low permeability refers to a base material having a surface with low moisture permeability, absorbability, or adsorptivity, and also includes a material having many cavities inside but having no outward opening. Examples of the base material having low permeability include, but are not limited to, a recording medium such as coated paper used for commercial printing, and a paperboard including a middle layer and a back layer containing waste paper pulp and a coated surface.

Further, as long as the base material includes hydroxyl groups on the surface, the base material may be a porous resin sheet used as an insulating layer for a power storage element or a power generation element, a paper separator containing cellulose fibers, an electrode base for a power storage element or a power generation element, or an active material layer provided on an electrode base.

The shape of the base material may be a curved surface or an uneven shape, and a base material that can be applied to application means and polymerization means of the apparatus for manufacturing a laminated structure body can be appropriately selected and used.

Even if the material of the base material does not include hydroxyl groups, the surface of the base material may include hydroxyl groups as a result of surface treatment such as corona treatment, plasma treatment, ozone treatment, and flame treatment.

By implementing the surface treatment, hydroxyl groups are added to the surface of the base material. This improves wettability and adhesiveness with the liquid composition. Further, the added hydroxyl groups on the surface of the base material react with functional groups capable of forming a covalent bond with a hydroxyl group in the liquid composition, to form covalent bonds, and thus, the adhesiveness can also be improved.

These types of surface treatment can be implemented by known methods.

The base material may contain known additives such as antistatic agents, ultraviolet absorbers, plasticizers, lubricants, and colorants.

<Porous Resin>

The porous resin is a porous resin obtained by polymerization of the above-described liquid composition of the present embodiment.

The average thickness of the porous resin is not particularly limited and can be appropriately selected according to a purpose. However, to achieve uniform curing during polymerization, the average thickness of the porous resin is preferably 0.01 $\mu$m or more and 500 $\mu$m or less, more preferably 0.01 $\mu$m or more and 100 $\mu$m or less, even more preferably 1 $\mu$m or more and 50 $\mu$m or less, and particularly preferably 10 $\mu$m or more and 20 $\mu$m or less. When the average thickness is 0.01 $\mu$m or more, the surface area of the obtained porous resin is increased, and the functions of the porous resin can be sufficiently exerted. When the average thickness is 500 $\mu$m or less, unevenness of the light or heat used for the polymerization is suppressed in a film thickness direction, so that it is possible to obtain a porous resin that is uniform in the film thickness direction. By preparing a porous resin that is uniform in the film thickness direction, structural unevenness is suppressed in the porous resin, and it is possible to prevent a decrease of the permeability for liquids and gases.

The average thickness of the porous resin is appropriately adjusted according to the application of the porous resin. For example, if the porous resin is used as an insulating layer for a power storage element or a power generation element, the average thickness of the porous resin is preferably 10 $\mu$m or more and 20 $\mu$m or less.

The average thickness can be determined by measuring the thickness at any three or more locations and calculating the average thereof.

In this case, the thickness includes only the thickness of the porous resin layer. For example, if the porous resin layer permeates into the base material, the thickness of a layer including the porous resin layer and the base material is not included.

The porous resin preferably has a co-continuous structure in which a plurality of pores are continuously coupled.

If the porous resin has a co-continuous structure, one of the physical properties is air permeability, and thus, it can be determined from the air permeability whether the porous resin has a co-continuous structure.

The air permeability of the porous resin is preferably 500 seconds/100 mL or less, and more preferably 300 seconds/100 mL or less.

The air permeability can be measured according to JIS P8117. In this case, the air permeability can be measured by using a Gurley densometer (manufactured by Toyo Seiki Seisaku-sho, Ltd.).

Here, the "co-continuous structure" refers to a two-phase continuous structure, that is, a structure in which two or more substances or phases each have a continuous structure and do not form an interface. In the present embodiment, the "co-continuous structure" refers to a structure in which a resin phase and a void phase form a continuous phase having a three-dimensional branched network. Such a structure can be formed, for example, by polymerizing the liquid composition by a polymerization-induced phase separation method.

The cross-sectional shape of the holes included in the porous resin is not particularly limited and may have various sizes and various shapes such as a substantially circular shape, a substantially elliptical shape, and a substantially polygonal shape. Here, the size of the holes indicates a length of the longest portion in the cross-sectional shape of the holes. The size of the holes can be determined from a cross-sectional image acquired using a scanning electron microscope (SEM).

The size of the holes of the porous resin is not particularly limited and may be appropriately selected according to a purpose. However, from the viewpoint of permeability in liquids and gases, the size of the holes is preferably 0.01 $\mu$m or more and 10 $\mu$m or less.

Further, the porosity of the porous resin is preferably 30% or more, and more preferably 60% or more.

A method for adjusting the size of the holes and the porosity of the porous resin to the above-described ranges is not particularly limited. Examples of the method include, but are not limited to, a method of adjusting the content of the polymerizable compound in the liquid composition to the above-described range, a method of adjusting the content of the porogen in the liquid composition to the above-described range, and a method of adjusting the irradiation conditions of active energy rays.

The surface of the base material on which the porous resin is formed may be one surface or may be a plurality of adjacent surfaces.

If the base material includes two surfaces having hydroxyl groups in two different directions and the two surfaces are adjacent to each other, it is preferable that the porous resin is provided to form a series of adjacent surfaces in the two different directions. According to such a configuration, the porous resin is fixed from two directions, and the adhesiveness is improved.

Further, the base material may have surfaces having hydroxyl groups in three or more different directions. At this time, it is preferable that the porous resin is provided continuously on two adjacent surfaces, and it is more preferable that the porous resin is provided continuously on the adjacent surfaces having hydroxyl groups in three or more different directions.

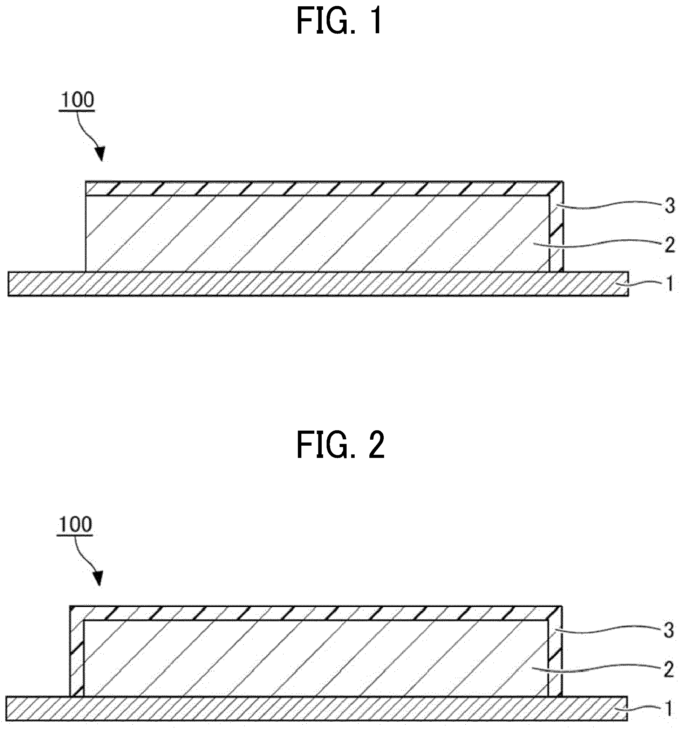

FIGS. 1 and 2 illustrate examples of a laminated structure body in an embodiment in which the base material is an active material layer provided on an electrode base for a power storage element or a power generation element, and the porous resin is an insulating layer for the power storage element or the power generation element.

A laminated structure body 100 in FIG. 1 includes an electrode base 1, an active material layer 2 provided on the electrode base 1, and a porous resin 3. The active material layer 2 is the base material, and the porous resin 3 functions as the insulating layer for a power storage element or a power generation element. In FIG. 1, the porous resin 3 is provided continuously on two adjacent surfaces of the active material layer 2. The active material layer 2 has hydroxyl groups on at least the two surfaces, and forms covalent bonds with functional groups of the porous resin 3 capable of forming a covalent bond with a hydroxyl group. Therefore, it is possible to obtain the laminated structure body 100 including the porous resin 3 having excellent adhesiveness with the base material and excellent substance permeability.

The laminated structure body 100 of FIG. 2 has a configuration similar to the laminated structure body of FIG. 1, except that the porous resin 3 is provided continuously on three or more adjacent surfaces of the active material layer 2. The active material layer 2 has hydroxyl groups on at least the three or more surfaces.

(Method of Manufacturing Laminated Structure Body and Apparatus for Manufacturing Laminated Structure Body)

A method of manufacturing a laminated structure body of the present embodiment includes the storage container of the present embodiment described above, the application means for applying the above-described liquid composition of the present embodiment accommodated in the storage container onto a base material, and polymerization means for polymerizing the liquid composition by applying heat or light, and further includes other means, if desired.

An apparatus for manufacturing a laminated structure body of the present embodiment includes an application step of applying the above-described liquid composition of the present embodiment onto a base material, and a polymerization step of polymerizing the liquid composition by applying heat or light, and further includes other steps, if desired.

<Application Means, Application Steps>

The application means are means for applying the liquid composition accommodated in the storage container onto a base material.

The application step is a step of applying the liquid composition onto a base material, and can be suitably implemented by the application means.

The application means and the application step are not particularly limited and may be appropriately selected according to a purpose, as long as the application means and the application step allow for application of the liquid composition. Examples thereof include, but are not limited to, any printing apparatus employing various types of printing methods such as spin coating, casting, micro gravure coating, gravure coating, bar coating, roll coating, wire bar coating, dip coating, slit coating, capillary coating, spray coating, nozzle coating, gravure printing, screen printing, flexographic printing, offset printing, reverse printing, and inkjet printing.

<Polymerization Means, Polymerization Step>

The polymerization means are means for polymerizing the liquid composition by applying heat or light.

The polymerization step is a step of polymerizing the liquid composition by applying heat or light, and can be suitably implemented by the polymerization means.

By the polymerization, the polymerizable compound in the liquid composition is polymerized, the porous resin is formed by polymerization-induced phase separation, and it is possible to manufacture a laminated structure body including a base material and a porous resin on the base material.

The polymerization means and the polymerization method are not particularly limited, and can be appropriately selected according to a purpose such as a polymerization initiator and a polymerization mode being used. Examples thereof include, but are not limited to, in the case of photopolymerization, light irradiation means and a light irradiation method for emitting ultraviolet rays having a wavelength of 365 nm for 3 seconds, and in the case of thermal polymerization, heating means and a heating method of heating for 12 hours by vacuum drying at 150°C.

Generally, examples of a method of obtaining a tough porous resin include, but are not limited to, a method of increasing the content of the polymerizable compound in a liquid composition for forming the porous resin. However, in such a case, even though the crosslink density of the entire porous resin can be improved, there are problems such as a decrease in the porosity of the obtained porous resin and a deterioration of the permeability of liquids and gases. In particular, if the porous resin is used as a separator layer for batteries, the battery characteristics tend to deteriorate.

To increase the strength of the porous resin without lowering the porosity, it is desirable to improve the crosslink density of the resin in a region that does not block the flow paths of the voids inside the porous resin.

From this viewpoint, it is more preferable that the polymerization means are means for applying light for polymerization.

Thus, a porous resin is first formed by photopolymerization, and then, polymerization and cross-linking reactions proceed by heating or the like, so that a covalent bond is formed between a functional group that can bond with a hydroxyl group and a hydroxyl group. Therefore, the crosslink density of the porous resin can be improved, so that it is possible to improve the crosslink density of the resin in a region that does not block the flow paths of the voids inside the porous resin.

That is, in the porous resin formed by photopolymerization, the crosslink density of the resin is improved inside or on the surface of the porous resin, so that the voids inside the porous resin are significantly less likely to clog. As a result, a tough porous resin can be prepared while maintaining good porosity.

<Covalent Bond Formation Means, Covalent Bond Formation Step>

A covalent bond formation means are means for forming a covalent bond between a hydroxyl group and a functional group capable of forming a covalent bond with a hydroxyl group included in a polymerizable compound, by applying external energy such as heat to a liquid composition or a porous resin.

A covalent bond formation step is a step of forming a covalent bond between a hydroxyl group and a functional group capable of forming a covalent bond with a hydroxyl group included in a polymerizable compound, by applying external energy to a liquid composition or a porous resin. The covalent bond formation step can be suitably implemented by the covalent bond formation means.

By applying external energy such as heat to the liquid composition applied in the application step or the porous resin formed in the polymerization step, a covalent bond is formed between a hydroxyl group and a functional group capable of forming a covalent bond with a hydroxyl group, and thus, the crosslink density of the formed resin can be improved. Therefore, it is possible to improve the crosslink density of the porous resin in a region inside or on the surface of the porous resin while maintaining good porosity, and obtain a porous resin having high strength.

The covalent bond formation step may be implemented simultaneously with or after the polymerization step, may be implemented between the polymerization step and a heating step described later performed after the polymerization step, or may be implemented simultaneously with the heating step, and may be implemented after the heating step.

Specifically, if a desired temperature in the covalent bond formation step is Ta (°C) and a desired temperature in the heating step is Tb (°C), the timings of the covalent bond formation step are the timings (1) to (4) or the cases described below. (1) The timing is simultaneous with the polymerization step, that is, a case where the polymerization step is implemented at Ta or a higher temperature. (2) A heating step is further provided and the timing is between the polymerization step and the heating step, that is, a case where, after the polymerization step is implemented at a temperature below Ta, and before the heating step is implemented at Tb or a higher temperature, the covalent bond formation step is implemented at Ta or a higher temperature and a temperature below Tb (where Ta < Tb). (3) A heating step is further provided and the timing is simultaneous to the heating step, that is, a case where, after the polymerization step is implemented at a temperature below Ta, the covalent bond formation step is implemented at Tb or a higher temperature (where Ta < Tb). (4) A heating step is further provided and the timing is a timing after the heating step, that is, a case where, after the polymerization step is implemented at a temperature below Tb, the heating step is implemented at Tb or a higher temperature and below Ta, and then, the covalent bond formation step is implemented at Ta or a higher temperature (where Tb < Ta).

In the scope of the present specification and claims, Ta is the temperature at which a hydroxyl group and a functional group capable of forming a covalent bond with a hydroxyl group included in a polymerizable compound form a covalent bond under the conditions in the covalent bond formation step. Tb is the boiling point of a liquid contained in a liquid composition described later, under the conditions (for example, atmospheric pressure) in the heating step.

Further, it can be confirmed by infrared spectroscopy (IR), nuclear magnetic resonance (NMR), or the like that a hydroxyl group and a functional group capable of forming a covalent bond with a hydroxyl group included in the polymerizable compound form a covalent bond.

In the covalent bond formation step, the heat applied to the liquid composition or the porous resin can be suitably selected, as long as the temperature Ta is a temperature at which a covalent bond is formed between a hydroxyl group and a functional group capable of forming a covalent bond with a hydroxyl group included in the polymerizable compound. However, the temperature Ta is preferably 60°C or higher, and more preferably 100°C or higher.

Further, in the covalent bond formation step, heat may be applied under reduced pressure. By applying heat under reduced pressure, it is possible to promote the formation of covalent bonds between hydroxyl groups and functional groups capable of forming a covalent bond with hydroxyl groups of the polymerizable compound. Moreover, in the covalent bond formation step, the heat applied to the liquid composition or the porous resin preferably has a higher temperature than in the heating step. In this case, after the liquid contained in the voids of the porous resin is removed, the functional groups capable of forming covalent bonds with the hydroxyl groups can react on the skeleton surface of the porous resin to form covalent bonds.

<Other Configurations, Other Steps>

Other configurations of the apparatus for manufacturing a laminated structure body are not particularly limited and can be appropriately selected according to a purpose, as long as the effects of the present embodiment are not impaired. Examples thereof include, but are not include to, desorption means and heating means.

Other steps in the method of manufacturing a laminated structure body are not particularly limited and can be appropriately selected according to a purpose, as long as the effects of the present embodiment are not impaired. Examples thereof include, but are not include to, desorption step and a heating step.

<<Heating Means, Heating Step>>

The heating means are means for heating the porous resin obtained by polymerizing the liquid composition by the polymerization means.

The heating step is a step of heating the porous resin obtained by polymerizing the liquid composition in the polymerization step, and can be suitably implemented by the heating means.

By the heating, the liquid contained in the holes or the like of the porous resin can be dried or removed.

<<Desorption Means, Desorption Step>>

If the liquid composition contains a polymerizable compound having a functional group capable of forming a covalent bond with a hydroxyl group and is blocked by a blocking agent, it is preferable to desorb the blocking agent.

The desorption means are means for desorbing the blocking agent of the polymerizable compound having a functional group capable of forming a covalent bond with a hydroxyl group and is blocked by the blocking agent.

The desorption step is a step of desorbing the blocking agent of the polymerizable compound having a functional group capable of forming a covalent bond with a hydroxyl group and is blocked by the blocking agent. The desorption step can be suitably implemented by the desorption means.

By the desorption, it is possible to activate the functional group capable of forming a covalent bond with a hydroxyl group. Therefore, in the process of forming a resin by polymerization, it is possible to block the reactivity of the functional group capable of forming a covalent bond with a hydroxyl group, and after the polymerization, form a covalent bond with a hydroxyl group on the base material.

The desorption means and the desorption method are not particularly limited and can be appropriately selected according to a purpose such as the blocking agent being used. For example, if the blocking agent is a thermally dissociable blocking agent, heating means and a heating method can be employed, and the desorption means and the desorption method can be implemented simultaneously with the heating means and the heating method.

[Embodiment where Laminated Structure Body is formed by Direct Application of Liquid Composition to Base Material]

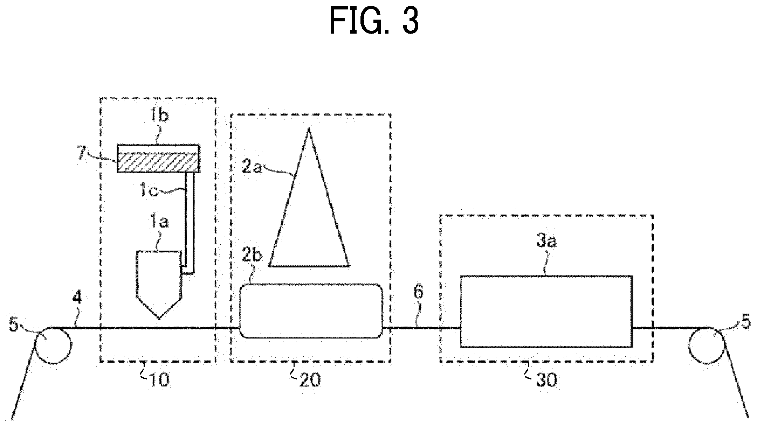

FIG. 3 is a schematic diagram illustrating an example of an apparatus for manufacturing a laminated structure body (liquid discharge apparatus) for implementing a method of manufacturing a laminated structure body according to the present embodiment.

The apparatus for manufacturing a laminated structure body is an apparatus for manufacturing a laminated structure body by using the liquid composition described above. The apparatus for manufacturing a laminated structure body includes a printing portion 10 that performs an application step of applying a liquid composition onto a printing base material 4 to form a liquid composition layer, a polymerization portion 20 that performs a polymerization step of polymerizing the liquid composition layer by applying heat or light, and a heating portion 30 that performs a heating step of heating a porous resin precursor 6 and removing a solvent in the holes to obtain a porous resin. The apparatus for manufacturing a laminated structure body includes a conveyance portion 5 for conveying the printing base material 4, and the conveyance portion 5 conveys the printing base material 4 in the order of the printing portion 10, the polymerization portion 20, and the heating portion 30 at a speed set in advance.

- Printing Portion 10 -

The printing portion 10 includes a printing device 1a, which is an example of application means for implementing the application step in which the liquid composition is applied onto the printing base material 4, a storage container 1b for accommodating the liquid composition, and a supply tube 1c that supplies the liquid composition stored in the storage container 1b to the printing device 1a.

The storage container 1b accommodates a liquid composition 7, and the printing portion 10 discharges the liquid composition 7 from the printing device 1a and applies the liquid composition 7 onto the printing base material 4 to form a liquid composition layer in a thin film shape. The storage container 1b may be integrally formed with the apparatus for manufacturing a laminated structure body, or may be removable from the apparatus for manufacturing a laminated structure body. The storage container 1b may be a container used for addition to a storage container integrally formed with the apparatus for manufacturing a laminated structure body or a storage container removable from the apparatus for manufacturing a laminated structure body.

Any storage container 1b and any supply tube 1c which can stably store and supply the liquid composition 7, may be selected. A material forming the storage container 1b and the supply tube 1c preferably has a light-shielding property in a relatively short wavelength region of ultraviolet and visible light. Thus, the liquid composition 7 is prevented from initiating polymerization by external light.

- Polymerization Portion 20 -

As illustrated in FIG. 3, in the case of photopolymerization, the polymerization portion 20 includes a light irradiation device 2a, which is an example of a polymerization means for implementing the polymerization step, and a polymerization-inactive gas circulating device 2b for circulating a polymerization-inactive gas. The light irradiation device 2a irradiates, with light, the liquid composition layer formed by the printing portion 10 in the presence of a polymerization-inactive gas to obtain the porous resin precursor 6 by photopolymerization.

The light irradiation device 2a is appropriately selected according to an absorption wavelength of the photopolymerization initiator included in the liquid composition layer, and is not particularly limited, as long as the light irradiation device 2a allows for initiation and promotion of the polymerization of a compound in the liquid composition layer. Examples of the light irradiation device 2a include, but are not limited to, an ultraviolet light source such as a high-pressure mercury lamp, a metal halide lamp, a hot cathode tube, a cold cathode tube, and an LED. However, light having a shorter wavelength generally tends to reach deeper areas, and thus, it is preferable to select the light source according to the thickness of the porous film to be formed.

Next, regarding the irradiation intensity of the light source of the light irradiation device 2a, if the irradiation intensity is excessively strong, polymerization progresses rapidly before sufficient phase separation occurs, and thus, there is a tendency that it is difficult to obtain a porous structure. If the irradiation intensity is excessively weak, the phase separation proceeds at the microscale or at a larger scale, and variation and coarsening of the porous material are likely to occur. In addition, the irradiation time increases, and the productivity tends to decrease. Therefore, the irradiation intensity is preferably 10 mW/cm$^2$ or more and 1 W/cm$^2$ or less, and more preferably 30 mW/cm$^2$ or more and 300

mW/cm$^2$ or less.

The polymerization-inactive gas circulating device 2b has a function of reducing the concentration of polymerization-active oxygen included in the atmosphere, and promoting the polymerization reaction of the polymerizable compound in the vicinity of the surface of the liquid composition layer without hindrance. Therefore, the polymerization-inactive gas being used is not particularly limited as long as such a gas satisfies the above-described functions, and examples thereof include, but are not limited to, nitrogen, carbon dioxide, and argon.

From the viewpoint of effectively obtaining the effect of reducing the hindrance, the O$_2$-concentration of the polymerization-inactive gas preferably is less than 20% (an environment having lower oxygen concentration than the atmosphere), more preferably 0% or more and 15% or less, and even more preferably 0% or more and 5% or less. To realize conditions for the stable progress of polymerization, the polymerization-inactive gas circulating device 2b preferably includes temperature adjustment means that adjust the temperature.

In the case of thermal polymerization, the polymerization portion 20 may be a heating device. The heating device is not particularly limited and can be appropriately selected according to a purpose. Examples of the heating device include, but are not limited to, substrate heating (for example, a hot plate), an IR heater, a hot air heater, and a combination of these heating devices.

Further, the heating temperature, time, and light irradiation conditions can be appropriately selected according to the polymerizable compound contained in the liquid composition 7 and the film thickness to be formed.

- Heating Portion 30 -

As illustrated in FIG. 3, the heating portion 30 includes a heating device 3a, and performs a liquid removal step of heating, by the heating device 3a, the porous resin precursor 6 formed by the polymerization portion 20 to dry and remove remaining liquid. Thus, a porous resin is formed. The heating portion 30 may remove the liquid under reduced pressure.

The heating portion 30 also performs a polymerization promotion step of heating a porous resin precursor 6 by the heating device 3a to further promote the polymerization reaction implemented by the polymerization portion 20, and an initiator removal step of removing a photopolymerization initiator remaining in the porous resin precursor 6 by heating and drying by the heating device 3a. The polymerization promotion step and the initiator removal step may not be implemented at the same time as the liquid removal step, but may be implemented before or after the liquid removal step.

The heating portion 30 further performs, after the liquid removal step, a polymerization completion step in which the porous material is heated under reduced pressure. The heating device 3a is not particularly limited, as long as the heating device 3a satisfies the above-described functions, and examples thereof include, but are not limited to, an IR heater and a hot air heater.

It is possible to appropriately select a heating temperature and a time period according to the boiling point of the liquid included in the porous resin precursor 6 or the film thickness to be formed.

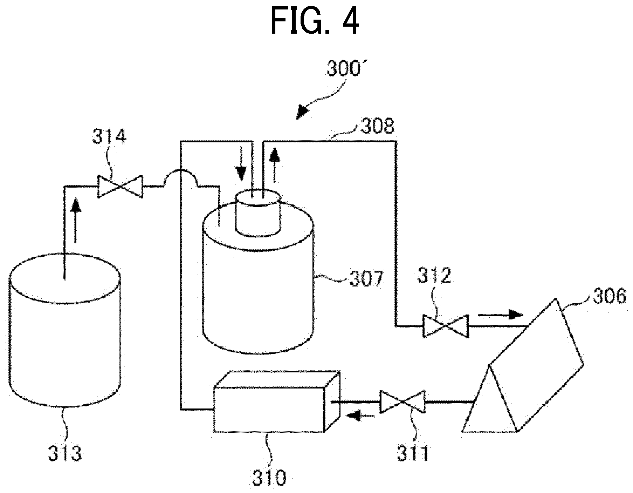

FIG. 4 is a schematic diagram illustrating another example of an apparatus for manufacturing a laminated structure body (liquid discharge apparatus) for implementing a method of manufacturing a laminated structure body according to the present embodiment.

A liquid discharge apparatus 300' may control a pump 310 and valves 311 and 312 to circulate the liquid composition in a liquid discharge head 306, a tank 307, and a tube 308.

The liquid discharge apparatus 300' includes an external tank 313, and when the liquid composition in the tank 307 is decreased, it is also possible to supply a liquid composition from the external tank 313 to the tank 307 by controlling the pump 310, the valves 311 and 312, and a valve 314.

The apparatus for manufacturing a laminated structure body can be used to discharge the liquid composition onto a target location of an application object.

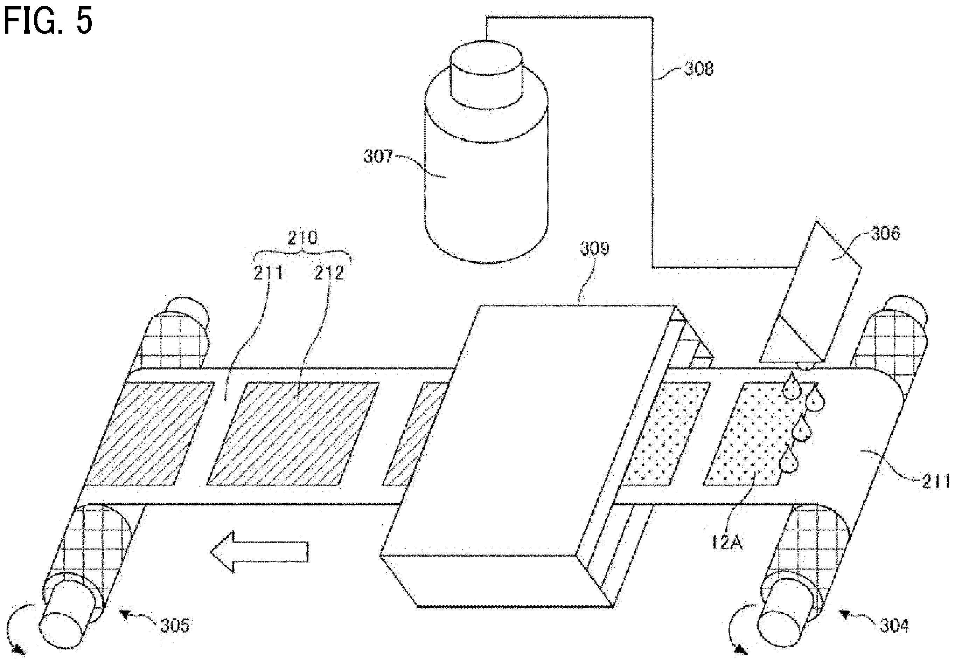

FIG. 5 illustrates another example of a method of manufacturing a laminated structure body according to the present embodiment.

A method of manufacturing a laminated structure body 210 provided in a porous resin on a base material, includes a step of sequentially discharging a liquid composition 12A onto a base material 211 by using the liquid discharge apparatus 300'.

First, the base material 211 having an elongated shape is prepared. The base material 211 is wound around a cylindrical core, and set on a feed roller 304 and a wind-up roller 305 so that the side of the base material 211 on which a porous resin 212 is formed faces upward in FIG. 5. Here, the feed roller 304 and the wind-up roller 305 rotate counterclockwise, and the base material 211 is conveyed from right to left in FIG. 5. Similarly to FIG. 3, droplets of the liquid composition 12A are discharged from the liquid discharge head 306 installed above the base material 211 between the feed roller 304 and the wind-up roller 305, onto the base material 211 that is sequentially conveyed.

A plurality of the liquid discharge heads 306 may be installed in a direction substantially parallel or substantially perpendicular to a conveyance direction of the base material 211. Next, the base material 211 onto which the droplets of the liquid composition 12A are discharged is conveyed to a polymerization portion 309 by the feed roller 304 and the wind-up roller 305. As a result, the porous resin 212 is formed, and the laminated structure body 210 in which the porous resin is provided on the base material is obtained. After that, the laminated structure body 210 including a polymer electrolyte is cut into a desired size by punching processing or the like.

The polymerization portion 309 may be installed either above or below the base material 211, or a plurality of the polymerization portions 309 may be installed.

The polymerization portion 309 is not particularly limited as long as the polymerization portion 309 does not directly contact the liquid composition 12A. In the case of thermal polymerization, examples of the polymerization portion 309 include, but are not limited to, a resistance heater, an infrared heater, and a fan heater. In the case of photopolymerization, examples of the polymerization portion 309 include, but are not limited to, an ultraviolet irradiation device. A plurality of the polymerization portions 309 may be provided.

The heating conditions and light irradiation conditions are not particularly limited and can be appropriately selected according to a purpose. The liquid composition 12A is polymerized in a polymerization to form a porous resin.

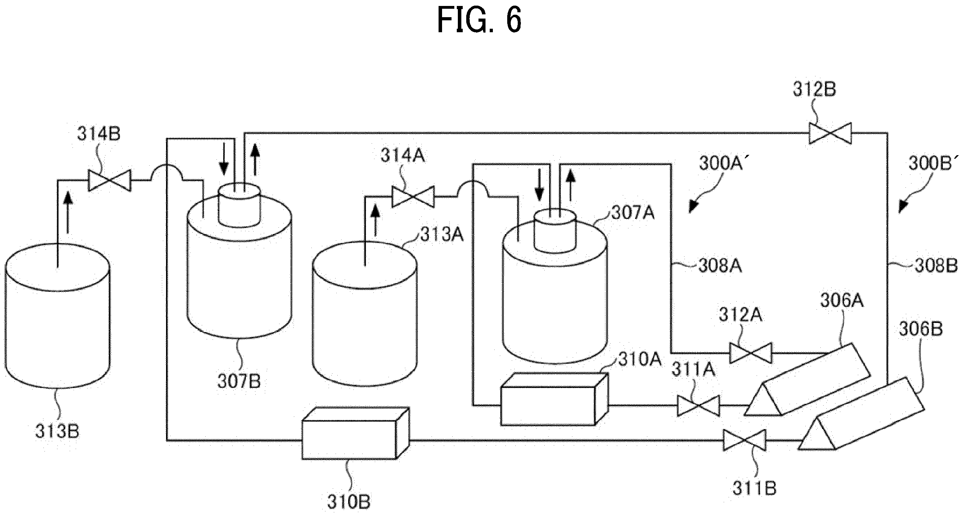

Alternatively, as illustrated in FIG. 6, a tank 307A may supply a liquid composition from a tank 313A connected to the tank 307A, and the liquid discharge head 306 may include a plurality of liquid discharge heads 306A and 306B.

[Embodiment where Electrolyte Layer is formed by Indirect Application of Liquid Composition to Base Material]

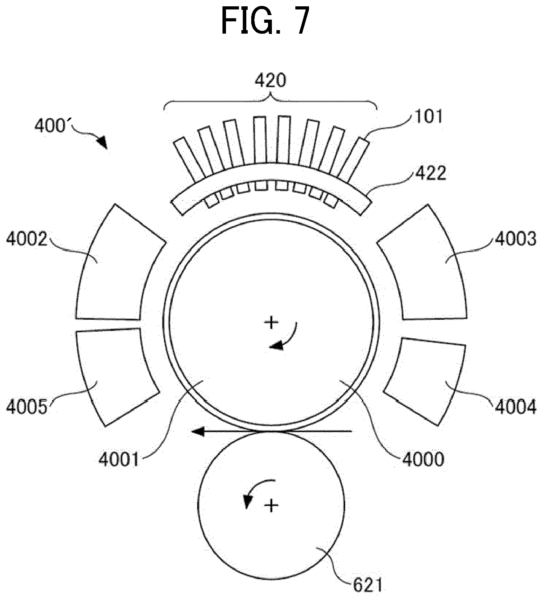

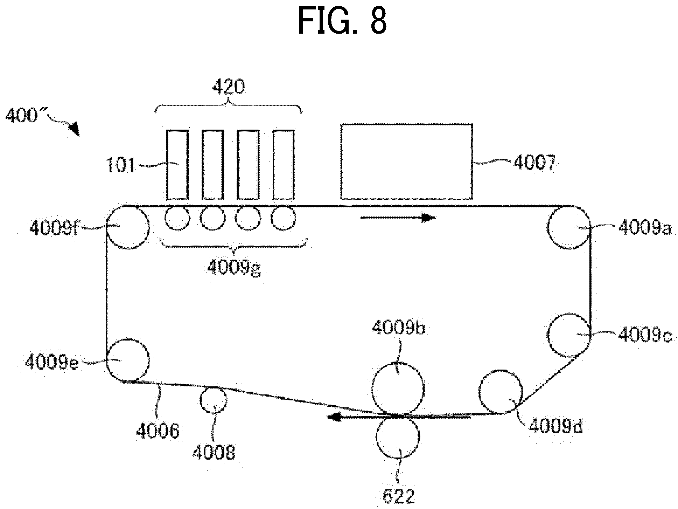

FIGS. 7 and 8 are configuration diagrams illustrating, as an example of an apparatus for manufacturing a laminated structure body according to the present embodiment, a printing portion employing an inkjet method and a transfer method as application means. FIG. 7 is a configuration diagram illustrating a printing portion using a drum-shaped intermediate transfer body. FIG. 8 is a configuration diagram illustrating a printing portion using an endless belt type intermediate transfer body.

A printing portion 400' illustrated in FIG. 7 is an inkjet printer that transfers a liquid composition or a porous resin onto a base material via an intermediate transfer body 4001, to form a porous resin on the base material.

In the present embodiment, the liquid composition preferably contains a polymerizable compound having a functional group capable of forming a covalent bond with a hydroxyl group and is blocked by a blocking agent. According to such an aspect, a porous resin having a blocked functional group capable of forming a covalent bond with a hydroxyl group is formed on the intermediate transfer body, transferred to the base material, and then, on the base material, the blocking agent can be desorbed. Thus, it is possible to form a covalent bond between a hydroxyl group on the base material and the activated functional group capable of forming a covalent bond with a hydroxyl group.

The printing portion 400' includes an inkjet portion 420, a transfer drum 4000, a pretreatment unit 4002, an absorption unit 4003, a heating unit 4004, and a cleaning unit 4005.

The inkjet portion 420 includes a head module 422 holding a plurality of heads 101. Each of the heads 101 discharges a liquid composition onto the intermediate transfer body 4001 supported by the transfer drum 4000 to form a liquid composition layer on the intermediate transfer body 4001. Each of the heads 101 is a line head, and nozzles are arrayed in a range covering a width of a recording region of a base material having a maximum usable size. The heads 101 each include, on a lower surface, a nozzle surface formed with nozzles, and the nozzle surface faces a surface of the intermediate transfer body 4001 with a small gap therebetween. In the case of the present embodiment, the intermediate transfer body 4001 is configured to circularly move on a circular path, and thus, the plurality of heads 101 are arranged radially.

The transfer drum 4000 faces an impression cylinder 621 and forms a transfer nip portion. For example, before the heads 101 discharge the liquid composition, the pretreatment unit 4002 applies a reaction liquid for increasing the viscosity of the liquid composition onto the intermediate transfer body 4001. Before the transfer, the absorption unit 4003 absorbs a liquid component from the liquid composition layer on the intermediate transfer body 4001. Before the transfer, the heating unit 4004 heats the ink layer on the intermediate transfer body 4001. By heating the liquid composition layer, the liquid composition is thermally polymerized to form a porous resin. Further, the liquid is removed, and the transferability to the base material is improved. After the transfer, the cleaning unit 4005 cleans the intermediate transfer body 4001 to remove foreign matter such as ink and dust remaining on the intermediate transfer body 4001.

An outer peripheral surface of the impression cylinder 621 is pressed against the intermediate transfer body 4001, and when the base material passes through the transfer nip portion between the impression cylinder 621 and the intermediate transfer body 4001, the porous resin on the intermediate transfer body 4001 is transferred to the base material. The impression cylinder 621 may include at least one gripping mechanism for holding a tip end portion of the base material on the outer peripheral surface of the impression cylinder 621.

A printing portion 400" illustrated in FIG. 8 is an inkjet printer that transfers a liquid composition or a porous resin onto a base material via an intermediate transfer belt 4006 to form a porous resin on the base material.

The printing portion 400" discharges droplets of a liquid composition from the plurality of heads 101 provided in the inkjet portion 420 to form a liquid composition layer on an outer peripheral surface of the intermediate transfer belt 4006. The liquid composition layer formed on the intermediate transfer belt 4006 is heated by a heating unit 4007 and thermally polymerized to form a porous resin, which forms a film on the intermediate transfer belt 4006.

In a transfer nip portion where the intermediate transfer belt 4006 faces a transfer roller 622, the porous resin formed into a film on the intermediate transfer belt 4006 is transferred to a base material. After the transfer, the surface of the intermediate transfer belt 4006 is cleaned by a cleaning roller 4008.

The intermediate transfer belt 4006 is stretched across a drive roller 4009a, a counter roller 4009b, a plurality of (four in the present example) shape maintaining rollers 4009c, 4009d, 4009e, and 4009f, and a plurality of (four in the present example) support rollers 4009g. The intermediate transfer belt 4006 moves in a direction of the arrow in FIG. 8.

Each of the support rollers 4009g provided to face a corresponding one of the heads 101 maintains a tensed state of the intermediate transfer belt 4006 when ink droplets are discharged from the head 101.

As described above, the "liquid composition" in FIGS. 7 and 8 is a liquid composition containing a polymerizable compound having a functional group capable of forming a covalent bond with a hydroxyl group and is blocked by a blocking agent. An embodiment in which the polymerizable compound is thermally polymerizable has been described, and in that case, the desorption temperature of the blocking agent is higher than the polymerization temperature, so that the embodiment can be suitably implemented.

Further, there may also be an embodiment in which the polymerizable compound is photopolymerizable and the blocking agent is a thermally dissociable blocking agent.

In the case of an embodiment in which the liquid composition is transferred before polymerization, the functional group capable of forming a covalent bond with a hydroxyl group may not be blocked, and after transferring the liquid composition layer to the base material, the liquid composition may be polymerized and a covalent bond with a hydroxyl group on the base material may be formed.

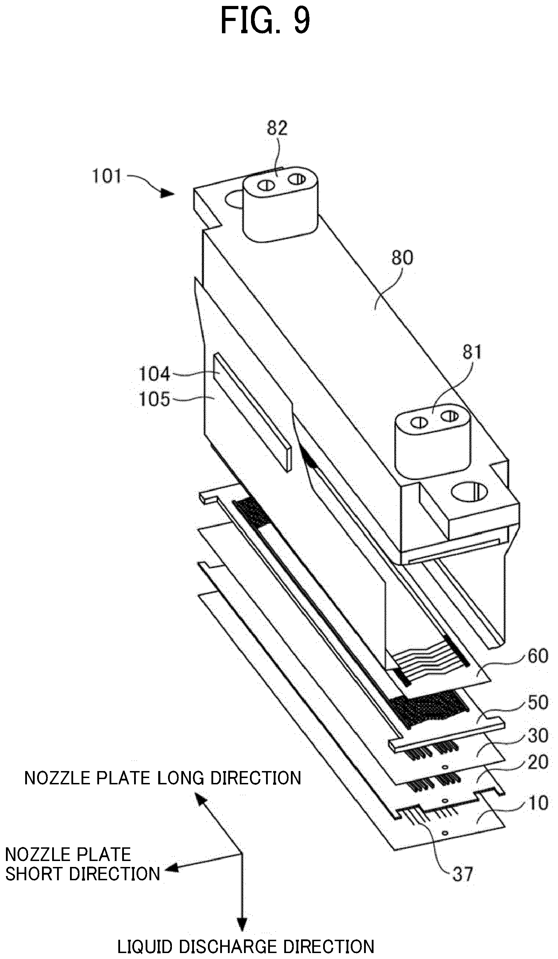

Next, a configuration of a liquid discharge head as an example of the application means will be described with reference to FIGS. 9 to 11.

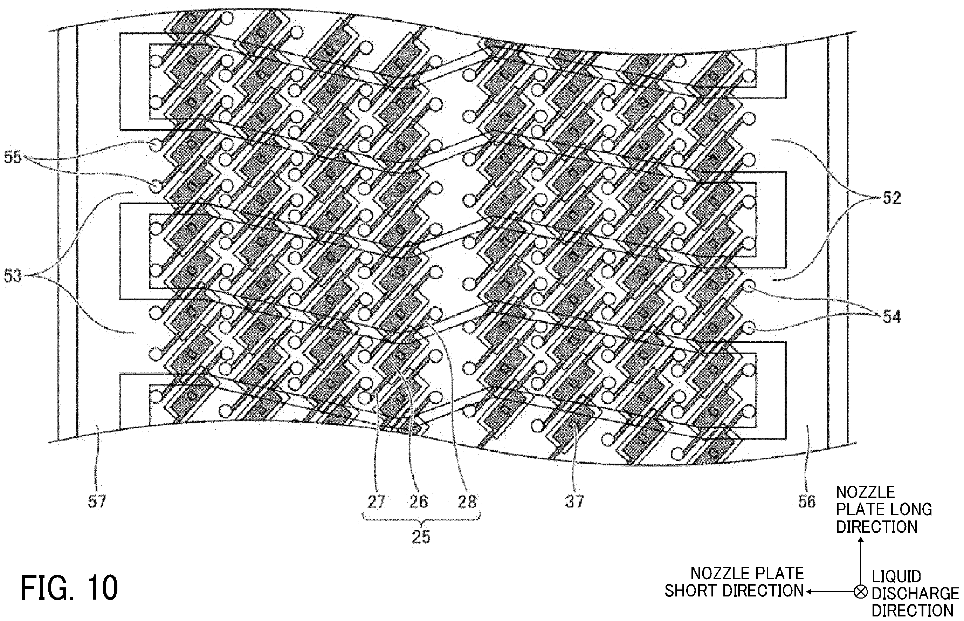

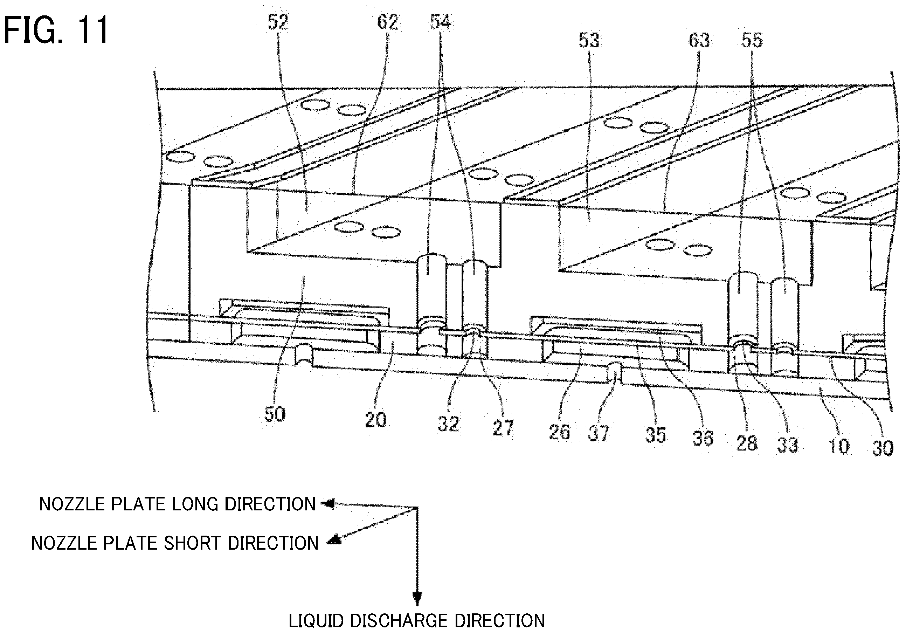

FIG. 9 is an exploded schematic view illustrating an example of a liquid discharge head. FIG. 10 is an explanatory diagram illustrating an example of a channel configuration of the liquid discharge head. FIG. 11 is a cross-sectional perspective view illustrating an example of the channel configuration of the liquid discharge head.

The head 101 includes a nozzle plate 10, a channel plate (individual channel member) 20, a vibrating plate member 30, a common channel member 50, a damper member 60, a frame member 80, and a substrate (a flexible wiring substrate) 105 to which a drive circuit 104 is mounted.

The nozzle plate 10 includes a plurality of nozzles 37 that discharge ink. The plurality of nozzles 37 are aligned two-dimensionally in a nozzle plate short direction and in a nozzle plate long direction perpendicular to the nozzle plate short direction.

The channel plate 20 includes a plurality of liquid chambers (individual pressure chambers) 26 each communicating with a corresponding one of the plurality of nozzles 37, and a plurality of supply channels (individual supply channels) 27 and recovery channels (individual recovery channels) 28 each leading to a corresponding one of the plurality of liquid chambers 26. In the following description, for the sake of convenience, one liquid chamber 26 and a supply channel 27 and a recovery channel 28 leading to the one liquid chamber 26 are collectively referred to as an individual channel 25.

The vibrating plate member 30 forms a vibrating plate 35 which is a deformable wall surface of the liquid chamber 26, and the vibrating plate 35 is integrally provided with a piezoelectric element 36. The vibrating plate member 30 includes a supply-side opening 32 leading to the supply channel 27 and a recovery-side opening 33 leading to the recovery channel 28. The piezoelectric element 36 deforms the vibrating plate 35 to pressurize the ink in the liquid chamber 26.

The channel plate 20 and the vibrating plate member 30 are not limited to being formed as separate members.

For example, it is possible to integrally form the channel plate 20 and the vibrating plate member 30 as one member by using a Silicon on Insulator (SOI) substrate.

That is, by using an SOI substrate in which a silicon oxide film, a silicon layer, and a silicon oxide film are formed in this order on a silicon substrate, and using the silicon substrate as the channel plate 20, it is possible to form the vibrating plate 35 including the silicon oxide film, the silicon layer, and the silicon oxide film. In this configuration, the layer structure of the silicon oxide film, the silicon layer, and the silicon oxide film of the SOI substrate forms the vibrating plate member 30. Thus, the vibrating plate member 30 includes a layer structure formed by a material film-formed on a surface of the channel plate 20.

The common channel member 50 is formed by alternately providing, adjacent to each other in the nozzle plate long direction, a plurality of common supply channel branches 52 leading to two or more of the supply channels 27, and a plurality of common recovery channel branches 53 leading to two or more of the recovery channels 28. The common channel member 50 is formed with a through hole that serves as a supply opening 54 leading to the supply-side opening 32 of the supply channel 27 and the common supply channel branch 52, and a through hole that serves as a recovery opening 55 leading to the recovery-side opening 33 of the recovery channel 28 and the common recovery channel branch 53.

The common channel member 50 is formed by one or a plurality of common supply channel main branches 56 leading to the plurality of common supply channel branches 52 and one or a plurality of common recovery channel main branches 57 leading to the plurality of common recovery channel branches 53.

The damper member 60 includes a supply-side damper 62 facing the supply opening 54 of the common supply channel branch 52 and a recovery-side damper 63 facing the recovery opening 55 of the common recovery channel branch 53. The common supply channel branch 52 and the common recovery channel branch 53 are formed by sealing groove portions arrayed alternately in the common channel member 50, which is the same member as the common supply channel branch 52 and the common recovery channel branch 53, with the supply-side damper 62 or the recovery-side damper 63 of the damper member 60. The damper material of the damper member 60 is preferably a thin metal film or a thin inorganic film that is resistant to organic solvents. The thickness of a portion of the damper member 60 forming the supply-side damper 62 and the recovery-side damper 63 is preferably 10 $\mu$m or less.

In the inner wall surfaces of the common supply channel branch 52 and the common recovery channel branch 53, and the inner wall surfaces of the common supply channel main branch 56 and the common recovery channel main branch 57, a protective film is formed to protect the inner wall surfaces against ink flowing through the channels. For example, a Si substrate is subjected to a heating process to form a silicon oxide film on the surface of the Si substrate, to form the inner wall surfaces of the common supply channel branch 52 and the common recovery channel branch 53, and the inner wall surfaces of the common supply channel main branch 56 and the common recovery channel main branch 57. A tantalum silicon oxide film is formed on the silicon oxide film to protect the surface of the Si substrate against ink.

The frame member 80 includes, in an upper portion, a supply port 81 and a discharge port 82. The supply port 81 supplies ink to the common supply channel main branch 56. The discharge port 82 discharges the ink discharged from the common recovery channel main branch 57.

As described above, the head 101 includes the nozzles 37 that discharge ink, the liquid chambers 26 leading to the nozzles 37, the supply channels 27 that supply ink to the liquid chambers 26, and the recovery channels 28 that recover ink from the liquid chambers 26. Here, the ink is an example of the "liquid composition", the head 101 is an example of the "liquid discharge head", each of the liquid chambers 26 is an example of the "liquid chamber", each of the supply channels 27 is an example of the "supply channel", and each of the recovery channels 28 is an example of the "recovery channel".

In the configuration of the head 101, the shape of the nozzle surface of the nozzle plate 10 (the surface on which the nozzles 37 are formed) is not limited to a rectangle, and may be a shape other than the rectangle such as a trapezoid, a rhombus, or a parallelogram.

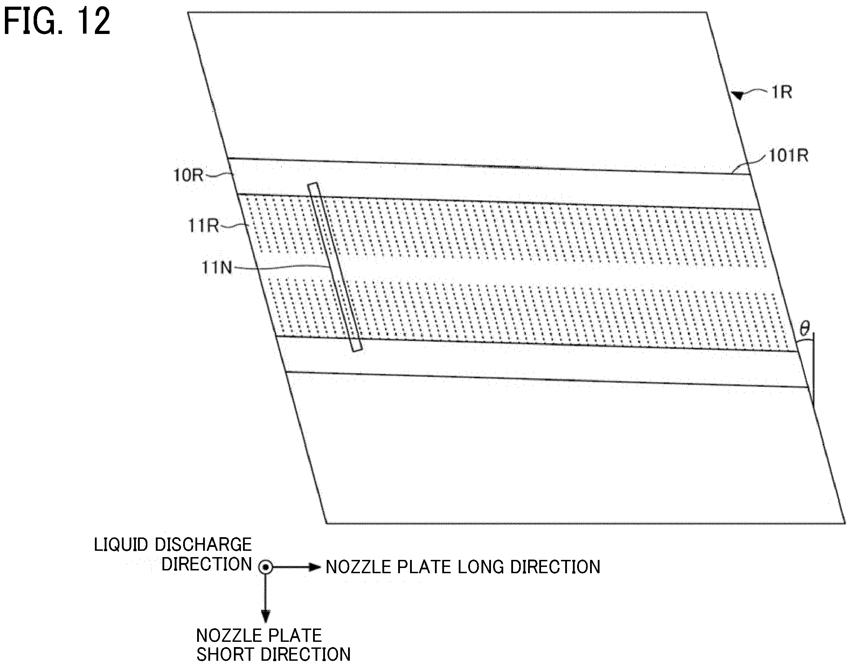

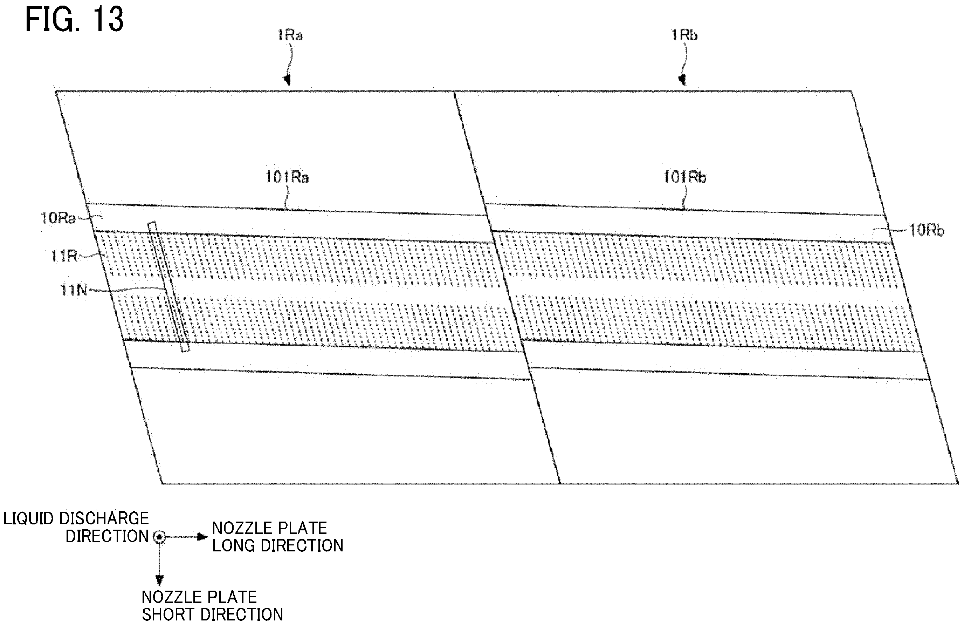

An example of the shape of the nozzle surface will be described with reference to FIGS. 12 and 13. FIG. 12 is a configuration diagram illustrating an example of a head including a nozzle plate having a parallelogram shape, and FIG. 13 is an explanatory diagram illustrating a state where a plurality of the heads in FIG. 12 are aligned.

A head 1R has an outer shape (ridgeline) inclined at an angle 0 with respect to the nozzle plate short direction, and a liquid discharge portion 101R and a nozzle plate 10R of the head 1R are also formed in a shape along the ridgeline.

That is, the liquid discharge portion 101R includes the nozzle plate 10R having a parallelogram as an outer shape, and a plurality of nozzles 37R are regularly arrayed two-dimensionally on the nozzle plate 10R. In the array of the nozzles 37R, for example, one nozzle row 37N includes N of the nozzles 37R, and a plurality of the nozzle rows 37N are arrayed in parallel to the ridgeline mentioned above in the nozzle plate long direction perpendicular to the nozzle plate short direction.

As illustrated in FIG. 13, in the head 1R having the above-described configuration, a plurality of heads 1Ra and 1Rb may be aligned in one row in the nozzle plate long direction, so that it is possible to obtain a line head having a desired length in accordance with a recording width of the base material to be used.

[Application of Liquid Composition and Laminated Structure Body]

<Application as Power Storage Element or Power Generation Element>

Applications of the liquid composition and the laminated structure body are not particularly limited and can be appropriately selected according to a purpose. However, it is preferable that the liquid composition is a liquid composition for forming an insulating layer for a power storage element or a power generation element, and the porous resin is an insulating layer for a power storage element or a power generation element.

When the liquid composition and the laminated structure body are used for these applications, it is preferable, for example, to form an insulating layer (a separator) by applying the liquid composition onto an active material layer formed in advance on an electrode base material as a base material.

When an electrode used for a power storage element such as a battery or a power generation element such as a fuel cell is used as a base material, there is concern that a short circuit may occur if the adhesiveness between the insulating layer, which is a porous structure body, and the base material is low and the structure body deforms due to an external impact, or when foreign matter such as a metal piece penetrates between the porous structure body and the base material and a gap is formed.

According to the liquid composition and the laminated structure body of the present embodiment, a porous resin having excellent adhesiveness to a base material and substance permeability can be formed on the base material, the occurrence of short circuits can be reduced, and excellent ionic conductivity can be ensured.

Known examples of the insulating layer for a power storage element or a power generation element include, but are not limited to, a film-like porous insulating layer having pores of a predetermined size or a predetermined porosity. On the other hand, if the above-described liquid composition is used, it is possible to appropriately change the pores and the porosity by appropriately adjusting the content of the polymerizable compound, the content of the porogen, the irradiation conditions of the active energy rays, and the like, so that it is possible to improve the degree of freedom in designing the performance of the power storage element and the power generation element. Further, the above-described liquid composition can be used in various application methods, and thus, the liquid composition can be applied by an inkjet method, so that it is possible to improve the degree of freedom in designing the shape of the power storage element and the power generation element.

Here, the insulating layer is a member that separates a positive electrode and a negative electrode from each other and secures ionic conductivity between the positive electrode and the negative electrode. In the present embodiment, a shape of the insulating layer is not limited to a layer shape.

The base material may be an insulating layer (a film separator) for a power storage element or a power generation element. If the liquid composition is applied onto the insulating layer (a first insulating layer) for a power storage element or a power generation element as the base material, an insulating layer (a second insulating layer) formed of a porous resin layer can be additionally formed. When the second insulating layer is formed on the first insulating layer, it is possible to add or improve various functions of the insulating layer, such as heat resistance, impact resistance, and shrinkage resistance at high temperatures.

The electrode base is not particularly limited, as long as the electrode base is a conductive base material. Examples of the electrode base include, but are not limited to, base materials that can generally be used for secondary batteries and capacitors, which are power storage devices, and among these, base materials that can suitably be used for lithium ion secondary batteries. Examples of the electrode base further include, but are not limited to, aluminum foil, copper foil, stainless steel foil, titanium foil, an etched foil with fine holes formed by etching the above-mentioned foils, and perforated electrode bases used for lithium ion capacitors. Further, it is possible to use an electrode base obtained by forming a flat surface of an electrode in the shape of carbon fibers in a non-woven or a woven state used in power generation devices such as fuel cells, and an electrode base among the above-described perforated electrode bases having fine holes. Moreover, in the case of solar devices, it is possible to use, in addition to the above-described electrodes, an electrode base obtained by forming, on a flat base material such as glass and plastic, a transparent semiconductor thin film such as a film of indium-titanium oxides and zinc oxides, or an electrode base obtained by thinly depositing a conductive electrode film by vapor deposition.

The active material layer is formed by dispersing an active material or a catalyst composition as a powder in a liquid, applying the obtained liquid onto an electrode base, and fixing and drying the liquid. Generally, the active material layer is formed by a printing method using a spray, a dispenser, a die coater, or dip coating, and drying the applied layer.

A positive electrode active material is not particularly limited as long as the positive electrode active material is a material that can reversibly occlude and release alkali metal ions. Typically, transition metal compounds containing alkali metals may be used as the positive electrode active material. Examples of transition metal compounds containing lithium include, but are not limited to, composite oxides including lithium and at least one element selected from the group including cobalt, manganese, nickel, chromium, iron, and vanadium. Examples of such composite oxides include, but are not limited to, transition metal oxides containing lithium such as lithium cobalt oxide, lithium nickel oxide, and lithium manganese oxide, olivine-type lithium salts such as $LiFePO_4$, chalcogen compounds such as titanium disulfide and molybdenum disulfide, and manganese dioxide. The transition metal oxide containing lithium refers to a metal oxide containing lithium and a transition metal or a metal oxide in which a part of the transition metal in the metal oxide is substituted with a hetero element.

Examples of the hetero element include, but are not limited to, Na, Mg, Sc, Y, Mn, Fe, Co, Ni, Cu, Zn, Al, Cr, Pb, Sb, and B, and in among these, Mn, Al, Co, Ni, and Mg are preferable. One type or two or more types of hetero elements may be contained in the metal oxide. Each of the above-described positive electrode active materials can be used alone or in combination with others. Examples of the active material in nickel hydride batteries include, but are not limited to, nickel hydroxide.

A negative electrode active material is not particularly limited as long as the negative electrode active material is a material that can reversibly occlude and release alkali metal ions. Typically, carbon materials including graphite having a graphite-type crystal structure may be used as the negative electrode active material. Examples of such carbon materials include, but are not limited to, natural graphite, spherical or fibrous synthetic graphite, hardly-graphitizable carbon (hard carbon), and easily-graphitizable carbon (soft carbon). Other than the carbon materials, lithium titanate may also be used. From the viewpoint of improving energy density of lithium ion batteries, high-capacity materials such as silicon, tin, silicon alloy, tin alloy, silicon oxide, silicon nitride, and tin oxide can also be suitably used as the negative electrode active material.

Examples of the active material in nickel hydride batteries include, but are not limited to, AB2-type and A2B-type hydrogen storage alloys.

Examples of a binding agent of the negative electrode and the positive electrode include, but are not limited to, PVDF, PTFE, polyethylene, polypropylene, aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyether sulfone, hexafluoropolypropylene, styrene-butadiene rubber, and carboxymethylcellulose. Further, a copolymer of two or more materials selected from tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene may also be used as the binding agent. In addition, mixtures of two or more materials selected from the materials mentioned above may also be used. Examples of a conducting agent included in the electrodes include, but are not limited to, graphite species such as natural graphite and synthetic graphite, carbon blacks such as acetylene black, Ketjen black, channel black, furnace black, lamp black, and thermal black, conductive fibers such as carbon fibers and metal fibers, metal powders such as fluorocarbon and aluminum, conductive whiskers such as zinc oxide and potassium titanate, conductive metal oxides such as a titanium oxide, and organic conductive materials such as phenylene derivatives and graphene derivatives.

Generally, in fuel cells, the active material serves as a catalyst for the cathode electrode or the anode electrode. The catalyst includes fine particles of metals such as platinum, ruthenium, and platinum alloy, supported on a catalyst carrier such as carbon. To obtain a catalyst carrier in which the catalyst particles are supported on the surface of the catalyst carrier, the catalyst carrier is suspended in water, a precursor of the catalyst particles (for example, a precursor including alloy components such as chloroplatinic acid, dinitrodiamino platinum, platinum(IV) chloride, platinum(II) chloride, bisacetylacetonatoplatinum, dichlorodiammine platinum, dichlorotetramine platinum, platinum sulfate chlororuthenate, hexachloroiridate, hexachlororhodate, ferric chloride, cobalt chloride, chromium chloride, gold chloride, silver nitrate, rhodium nitrate, palladium chloride, nickel nitrate, iron sulfate, and copper chloride) is added thereto to dissolve the catalyst particles in the suspension, and further, an alkali is added to produce a hydroxide of the metal. The catalyst carrier is then applied onto an electrode and reduced under a hydrogen atmosphere or the like, to prepare an electrode having a surface coated with the catalyst particles (the active material).

In the case of solar cells, examples of the active material include, but are not limited to, tungsten oxide powder, titanium oxide powder, and a semiconductor layer of an oxide such as $SnO_2$, $ZnO$, $ZrO_2$, $Nb_2O_5$, $CeO_2$, $SiO_2$, and $Al_2O_3$. The semiconductor layer carries a dye and examples thereof include, but are not limited to, a ruthenium-tris transition metal complex, a ruthenium-bis transition metal complex, an osmium-tris transition metal complex, an osmium-bis transition metal complex, a ruthenium-cis-diaqua-bipyridyl complex, phthalocyanine, and porphyrin, and a compound such as an organic-inorganic perovskite crystal.

(Method of Manufacturing Laminated Electrode or Laminated Separator, and Apparatus for Manufacturing Laminated Electrode or Laminated Separator)

The apparatus for manufacturing a laminated structure body according to the present embodiment can be used as an apparatus for manufacturing a laminated electrode by using an active material layer provided on an electrode base as a base material.

Further, the apparatus for manufacturing a laminated structure body according to the present embodiment can be used as an apparatus for manufacturing a laminated separator by using a film separator as the base material.

(Method for Manufacturing Power Storage Element or Power Generation Element, and Apparatus for Manufacturing Power Storage Element or Power Generation Element)

An apparatus for manufacturing a power storage element or a power generation element according to the present embodiment includes an electrode manufacturing portion for manufacturing a laminated electrode by the above-described apparatus for manufacturing a laminated structure body according to the present embodiment, and an element formation portion for manufacturing a power storage element or a power generation element by using the laminated electrode, and further includes other means, if desired.

A method of manufacturing a power storage element or a power generation element according to the present embodiment includes an electrode manufacturing step of manufacturing a laminated electrode by the above-described apparatus for manufacturing a laminated structure body according to the present embodiment, and an element formation step of manufacturing a power storage element or a power generation element by using the laminated electrode, and further includes other steps, if desired.

<Electrode Manufacturing Portion and Electrode Manufacturing Step>

The electrode manufacturing portion includes the storage container of the present embodiment described above, and application means for applying the liquid composition contained in the storage container onto an active material layer provided on an electrode base as an application target, preferably includes polymerization means for polymerizing the liquid composition by application of heat or light, and includes other means such as electrode processing means, if desired.

The electrode manufacturing step includes an application step of applying the above-described liquid composition according to the present embodiment onto an active material layer provided on an electrode base as an application target, preferably includes a polymerization step of polymerizing the liquid composition by application of heat or light, and includes other steps such as an electrode processing step, if desired.

A laminated electrode including an active material layer provided on an electrode base and an insulating layer formed of the porous resin of the present embodiment and provided on the active material layer, can be manufactured by the electrode manufacturing portion and the electrode manufacturing step. The laminated electrode including an electrolyte layer may be a laminated electrode including an integrally formed electrolyte layer in which the active material layer provided on the electrode base and the porous resin are integrally formed.

For the application means and the application step, the items described in the apparatus for manufacturing a laminated structure body and the method of manufacturing a laminated structure body can be appropriately selected.

For the polymerization means and the polymerization step, the items described in the apparatus for manufacturing a laminated structure body and the method of manufacturing a laminated structure body can be appropriately selected.

<Element Formation Portion and Element Formation Step>

The element formation portion corresponds to means for manufacturing a power storage element or a power generation element by using the laminated electrode.

The element formation step is a step of manufacturing a power storage element or a power generation element by using the laminated electrode.

The method of manufacturing a power storage element or a power generation element by using a battery is not particularly limited, and may be appropriately selected according to a purpose from known methods of manufacturing a power storage element or a power generation element. Examples of the method include, but are not limited to, a method in which a power storage element is formed by at least one of process among placing, winding, and laminating a counter electrode, or accommodating a counter electrode in a container.

The element formation step may not include the entire step of forming the element, and may include a part of the step of forming the element.

<Electrode Processing Portion and Electrode Processing Step>

An electrode processing portion processes the laminated electrode on which the resin layer is formed downstream of an application portion.

The electrode processing portion may perform at least one process among cutting, folding, and attaching. For example, a laminated electrode processing portion may cut the laminated electrode on which the resin layer is formed, and produce a laminated body of the laminated electrode. The electrode processing portion may wind or laminate the laminated electrode on which the resin layer is formed.

The electrode processing portion includes, for example, an electrode processing device, and cuts, folds, laminates, or winds the laminated electrode on which the porous resin layer is formed, depending on intended battery aspects.

The electrode processing step performed by the electrode processing portion is, for example, a step of processing the laminated electrode on which the resin layer is formed downstream of the application step. The electrode processing step may include at least one of a cutting step, a folding step, and an attaching step.

<Application for White Ink>

The liquid composition is whitened by removing the porogen after forming a porous resin, and thus, the liquid composition is preferably used as a white ink to be applied onto a recording medium. In the present embodiment, the white ink is not particularly limited, as long as the white ink is an ink capable of forming a white image. When an ink is used, a non-white ink (for example, transparent ink and ink of a color other than white) is also included.

Generally known examples of white ink include ink that contains an inorganic pigment such as titanium oxide as a coloring material and thus exhibits white color. However, in such white ink, the specific gravity of the coloring material is high, so that the coloring material easily deposits, and therefore, the white ink has poor storage stability and discharge stability. In this regard, the white ink formed by the above-described liquid composition can exhibit white color even without containing a white coloring material such as a pigment or a dye as a component other than the liquid composition, and thus, the storage stability and the discharge stability can be improved. The white ink of the present embodiment may contain a white coloring material, but is preferably substantially free of white coloring material.

If the white ink is substantially free of white coloring material, the content of the white coloring material is preferably 0.1 mass% or less, more preferably 0.05 mass% or less, even more preferably 0.01 mass% or less with respect to the mass of the white ink, and even more preferably equal to or less than the detection limit. Particularly preferably, no white coloring material is contained. As described above, the white ink is substantially free of white coloring material, and thus, it is possible to reduce the weight of a white image formed by the white ink. Such a white ink can be suitably used as white ink for aircraft coating, white ink for automobile coating, and the like.

Further, known examples of white ink include white ink that contains a plurality of types of polymerizable compounds, and becomes cloudy when the polymerizable compounds are cured and phase separation occurs between the polymers. However, in such white ink, the white color is exhibited by the phase separation between polymers and not by the air layer, so that the degree of whiteness is low. In this regard, when the liquid composition of the present embodiment is used as white ink, white color is exhibited by the porous resin having pores as air layers, so that a high degree of whiteness is exhibited. Here, the white color is a color referred to as "white" based on social conventions. The degree of whiteness can be evaluated by measuring the lightness ($L^*$) with a spectrodensitometer such as X-Rite 939. For example, when the white ink is applied at a duty of 100% or more or in an amount sufficient to cover the surface of a recording medium, the lightness ($L^*$) and the chromaticity ($a^*$, $b^*$) preferably satisfy $70 \leq L^* \leq 100$, $-4.5 \leq a^* \leq 2$, and $-6 \leq b^* \leq 2.5$.

The white ink of the present embodiment forms a layer formed of a porous resin when applied onto a recording medium. Thus, the white ink may be used as a primer ink for preparing a base layer (a primer layer) that improves the fixability of another ink (such as ink containing a coloring material) to be applied later.

Generally, when a base material having low permeability or an impermeable base material such as coated paper, a glass base material, a resin film base material, and a metal base material, is used as a recording medium, the fixability of ink to such base materials decreases. In this regard, if the white ink (primer ink) of the present embodiment is used, the fixability of the white ink (primer ink) to base materials having low permeability or impermeable base materials is high, and thus, it is possible to improve the fixability of another ink to be applied onto the base layer later. Even if the other ink (such as ink containing a coloring material) to be applied later is ink having a permeability (such as water-based ink) at which it is difficult to use the other ink in base materials having low permeability or impermeable base materials, the coloring material can be fixed to the surface of the porous resin while the ink component permeates and diffuses in the porous resin.

The white ink (primer ink) forms a receiving layer having white color that can conceal the color or transparency of a recording medium and can improve the image density of the other ink (such as ink containing a coloring material) to be applied later.

<Application for Three-Dimensional Fabrication>

The liquid composition can form a porous resin layer having a layer thickness in the height direction, and thus, a three-dimensional fabricated object can be fabricated by laminating a plurality of the porous resin layers. In three-dimensional fabrication, there is a generally a problem in that the three-dimensional fabricated object may be distorted due to shrinkage during curing. In this regard, a three-dimensional fabrication composition including the liquid composition of the present embodiment forms a porous body having a network structure by polymerization-induced phase separation. Therefore, the internal stress during polymerization is relaxed by the network structure, and the distortion of the fabricated object due to shrinkage during curing is suppressed.

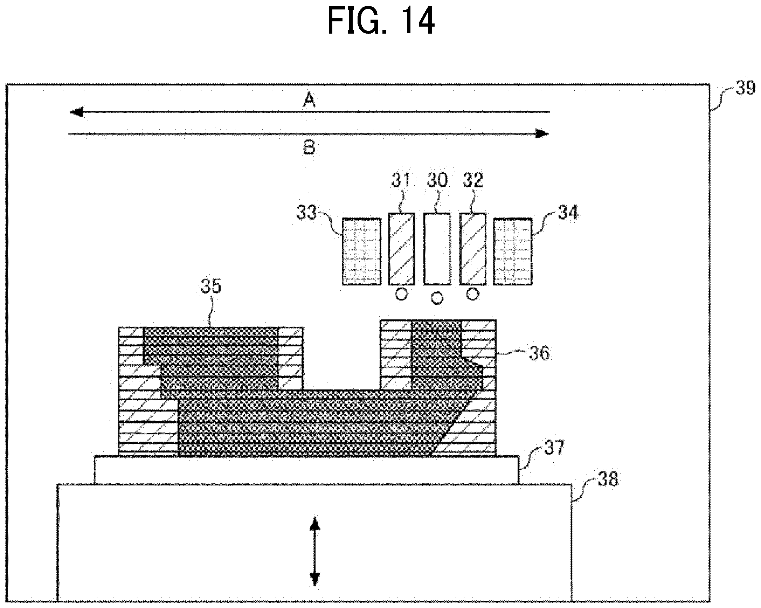

Next, a fabrication apparatus and a fabrication method for fabricating a three-dimensional fabricated object are described with reference to FIG. 14. FIG. 14 is a schematic diagram illustrating an example of a material-jet type fabrication apparatus.

The fabrication apparatus illustrated in FIG. 14 includes discharge means (an example of the application means) that discharge a liquid composition by an inkjet method, and curing means (an example of first irradiation means and second irradiation means) that irradiate the discharged liquid composition with active energy rays to cure the liquid composition. In this fabrication apparatus, the discharge means and the curing means sequentially repeat discharge and curing to fabricate a three-dimensional fabricated object. The fabrication method performed by the fabrication apparatus illustrated in FIG. 14 includes a discharge step (an example of a discharge step) of discharging a liquid composition by an inkjet method, and a curing step (an example of a first irradiation step and a second irradiation step) of curing the discharged liquid composition by irradiation with active energy rays. In this fabrication method, the discharge step and the curing step are sequentially repeated to fabricate a three-dimensional fabricated object.

The fabrication apparatus and the fabrication method will be described in detail. In a fabrication apparatus 39 illustrated in FIG. 14, a head unit (movable in an AB direction) in which inkjet heads are arranged, is used to discharge a first three-dimensional fabrication composition from a fabricated object discharge head unit 30, and discharge a second three-dimensional fabrication composition having a composition different from that of the first three-dimensional fabrication composition from support body discharge head units 31 and 32. The three-dimensional fabrication compositions are laminated while being cured by ultraviolet irradiation means 33 and 34 that are adjacent to each other. More specifically, the second three-dimensional fabrication composition is discharged from the support body head units 31 and 32 onto a fabricated object support substrate 37 and irradiated and solidified with active energy rays to form a first support body layer including a reservoir portion. Subsequently, the first three-dimensional fabrication composition is discharged from the fabricated object discharge head unit 30 to the reservoir portion and irradiated and solidified with active energy rays to form a first fabricated object layer. This step is repeated a plurality of times in accordance with the number of layers to be laminated while lowering a stage 38 movable in an up-down direction, thereby laminating support body layers and fabricated object layers to fabricate a three-dimensional fabricated object 35. Afterwards, a support body layer laminate portion 36 is removed, if desired. In FIG. 14, one fabricated object discharge head unit 30 is provided, but two or more may be provided.

<Application for Carrier Body>

If the liquid composition is mixed with a functional substance to form a porous resin, it is possible to prepare a carrier body in which the functional substance is carried on a surface of the porous resin. Here, the surface of the porous resin refers not only to an outer surface of the porous resin, but also to an inner surface thereof communicating with the outside. The pores communicating with the outside can carry the functional substance, and thus, the surface area that can carry the functional substance is increased.

If a carrier body forming liquid composition of the present embodiment is used, it is possible to change the pores and the porosity by appropriately adjusting the content of the polymerizable compound, the content of the porogen, the irradiation conditions of the active energy rays, and the like, so that it is possible to improve the degree of freedom in designing the performance of the carrier body. Further, the carrier body forming liquid composition of the present embodiment can be used in various application methods. For example, the carrier body forming liquid composition can be applied by an inkjet method, so that it is possible to improve the degree of freedom in designing the shape of the carrier body. Specifically, a carrier body can be uniformly formed not only on a flat surface but also on a curved surface, and a process such as cutting the carrier body to adjust the shape of the carrier body in accordance with the shape of a target object may be omitted. It is also possible to form a carrier body including particles by discharging the liquid composition by an inkjet method to form liquid droplets, and irradiating the liquid droplets in flight or independently attached to a base material with active energy rays.

The functional substance is a substance that directly or indirectly exerts a predetermined function. Preferably, the functional substance is a substance whose function increases or improves, as the area of the functional substance carried by the porous resin increases. More preferably, the carried functional substance is a substance whose function is exhibited when the functional substance is located on an outer surface and/or an inner surface communicating with the outside (in other words, a substance whose function is suppressed when the substance is located on an inner surface not communicating with the outside). The functional substance may be a substance that dissolves in the liquid composition or a substance that disperses in the liquid composition, but is preferably a substance that disperses in the liquid composition. The functional substance is not particularly limited and examples thereof include, but are not limited to, photocatalysts and physiologically active substances.

A photocatalyst is a substance that exhibits photocatalytic activity when irradiated with light in a specific wavelength range (excitation light having an energy equal to or greater than a band gap between the valence band and the conduction band of the photocatalyst).

The photocatalyst exhibits photocatalytic activity to provide various effects such as an antibacterial effect, deodorization, and decomposition of harmful substances including volatile organic compounds (VOC).

Examples of the photocatalyst include, but are not limited to, metal oxides such as anatase-type or rutile-type titanium(IV) oxide ($TiO_2$), tungsten(III) oxide ($W_2O_3$), tungsten(IV) oxide ($WO_2$), tungsten(VI) oxide ($WO_3$), zinc oxide (ZnO), iron(III) oxide ($Fe_2O_3$), strontium titanate ($SrTiO_3$), bismuth(III) oxide ($Bi_2O_3$), bismuth vanadate ($BiVO_4$), tin(II) oxide (SnO), tin(IV) oxide ($SnO_2$), tin(VI) oxide ($SnO_3$), zirconium oxide ($ZrO_2$), cerium(II) oxide (CeO), cerium(IV) oxide ($CeO_2$), barium titanate ($BaTiO_3$), indium(III) oxide ($In_2O_3$), copper(I) oxide ($Cu_2O$), copper(II) oxide (CuO), potassium

tantalate (KTaO$_3$), and potassium niobate (KNbO$_3$); metal sulfides such as cadmium sulfide (CdS), zinc sulfide (ZnS), and indium sulfide (InS); metal selenides such as cadmium selenate (CdSeO$_4$) and zinc selenide (ZnSe); and metal nitrides such as gallium nitride (GaN). Among these, the photocatalyst preferably includes at least one selected from titanium(IV) oxide (TiO$_2$), tin(IV) oxide (SnO$_2$), tungsten(III) oxide (W$_2$O$_3$), tungsten(IV) oxide (WO$_2$), and tungsten(VI) oxide (WO$_3$), and more preferably includes anatase-type titanium(IV) oxide (TiO$_2$).

Physiologically active substances are effective components used to exert a physiological effect on a living body. Specific examples of physiologically active substances include, but are not limited to, compounds having low molecular weight such as pharmaceutical compounds, food compounds, and cosmetic compounds, and compounds having high molecular weight including biopolymers such as proteins including antibodies and enzymes, and nucleic acids including DNA and RNA. The "physiological effect" is an effect caused by a physiologically active substance exhibiting physiological activity at a target site. Examples of the physiological effect include, but are not limited to, quantitative and/or qualitative changes and impacts on living bodies, tissues, cells, proteins, DNA, RNA, and the like. The "physiological activity" refers to the ability of a physiologically active substance to cause a change or impact on a target site (for example, target tissue and the like). Preferably, the target site is a receptor and the like present on the surface of a cell or inside a cell. In this case, the physiologically active substance binds to a specific receptor and a signal is transmitted to the cells by the physiological activity, so that a physiological effect is exerted. The physiologically active substance may be a substance that is converted into a mature form by an enzyme in the living body and then, binds to a specific receptor to exert a physiological effect. In this case, the meaning of the physiologically active substance in the present embodiment also includes a substance before the physiologically active substance is converted into the mature form. The physiologically active substance may be a substance produced by an organism (a human or a non-human organism) or may be an artificially synthesized substance. If a liquid composition containing such a physiologically active substance is used to form a carrier body including particles, to exhibit a desired physiological effect, the carrier body can be used as particles that deliver the physiologically active substance to a target site, that is, particles used in a drug delivery system (DDS), or as sustained-release particles that continuously release a drug over an extended period of time. Further, if a liquid composition containing a physiologically active substance is used to form a carrier body having a sheet shape, the carrier body can be used as a sustained-release sheet that continuously releases a drug over an extended period of time.

<Application for Surface Modification>

The outer surface of the porous resin formed from the liquid composition has fine irregularities derived from the porosity, and thus, the wettability can be controlled. Specifically, if the resin forming the porous resin is hydrophilic, the outer surface of the porous resin can be imparted with a higher hydrophilicity than that of the planar surface formed by the resin. If the resin forming the porous resin is water-repellent, the outer surface of the porous resin can be imparted with a higher water repellency than that of the planar surface formed by the resin. Accordingly, it is easy to modify the wettability of the surface of a target object by applying a surface-modifying liquid containing the liquid composition of the present embodiment to the surface of the target object to form a surface-modified layer.

If the liquid composition of the present embodiment is used, it is possible to change the irregularities (irregularities originating from the pores and the porosity) on the outer surface of the porous material, by appropriately adjusting the content of the polymerizable compound, the content of the porogen, the irradiation conditions of the active energy rays, and the like, and thus, it is possible to improve the degree of freedom in designing the performance of the surface-modified layer. Further, the liquid composition of the present embodiment can be used in various application methods. Therefore, the liquid composition can be applied by an inkjet method, so that it is possible to improve the degree of freedom in designing the shape of the surface-modified layer. Specifically, the surface-modified layer can be uniformly formed not only on a flat surface, but also on a curved surface.

<Application for Separation or Reaction Layer>

If fluids such as liquids and gases can permeate the porous resin formed by the liquid composition, the porous resin can be used as a flow path for such a fluid. If the porous resin can be used as a flow path for a fluid, the porous resin can be used as a separation layer that separates a predetermined substance from a fluid or as a reaction layer (microreactor) that provides a small reaction field for a fluid. In other words, the liquid composition of the present embodiment is preferably included in a separation layer forming composition or a reaction layer forming composition. It is preferable that the porous resin used in these applications allows for uniform and efficient permeation of fluids inside the porous resin.

In this regard, in the porous resin formed by the liquid composition of the present embodiment, the porous material is formed by phase separation, so that voids are continuously connected to each other and the porous resin has a structure that allows for uniform and efficient permeation of fluids.

The case where the porous resin is permeable to fluids such as liquids and gases is not particularly limited, but is preferably a case where the air permeability measured in accordance with JIS P8117 is 500 seconds/100 mL or less, and more preferably 300 seconds/100 mL or less. In this case, the air permeability may be measured by using a Gurley densometer (manufactured by Toyo Seiki Seisaku-sho, Ltd.).

Here, the "separation" refers to removal or concentration of a predetermined substance contained in a fluid mixture. The "removal" is not limited to a case where the predetermined substance is completely removed from the fluid mixture and may include a case where a part of the predetermined substance is removed.

The reaction field refers to a place where a predetermined chemical reaction proceeds when a predetermined substance contained in a fluid passes through.

If the liquid composition is used for a separation layer, the liquid composition preferably contains a polymerizable compound having a functional group that can interact with a predetermined substance contained in a fluid. When the porous resin is formed by using the liquid composition, the functional group that can interact with a predetermined substance can be arranged on the surface (inner surface and outer surface) of the porous resin, and thus, it is possible to effectively separate a predetermined substance. The polymerizable compound having a functional group that can interact with a predetermined substance contained in a fluid may form a part of the polymerizable compound contained in the liquid composition, or may entirely form the polymerizable compound. The expression "functional group that can interact with a predetermined substance" includes a case where the functional group can interact with a predetermined substance, and also includes a case where the functional group can interact with a predetermined substance after graft polymerization is additionally performed.

If the liquid composition is used for a reaction layer, the liquid composition preferably contains a polymerizable compound having a functional group that provides a reaction field to a fluid. When the porous resin is formed by using the liquid composition, the functional group that provides a reaction field to a fluid can be arranged on the surface (inner surface and outer surface) of the porous resin, and thus, it is possible to effectively provide a reaction field. The polymerizable compound having a functional group that provides a reaction field to a fluid may form a part of the polymerizable compound contained in the liquid composition, or may entirely form the polymerizable compound. The expression "functional group that provides a reaction field to a fluid" includes a case where the functional group can provide a reaction field, and also includes a case where the functional group can provide a reaction field after graft polymerization is additionally performed.

The separation layer and the reaction layer are formed by filling a container capable of forming a fluid inflow portion and a fluid outflow portion such as a glass tube with the liquid composition and curing the liquid composition, for example. The separation layer and the reaction layer may also be formed (drawn) by using the liquid composition to print a flow path of a desired shape formed of the porous resin on a base material by an inkjet method or the like. The flow paths of the separation layer and the reaction layer can be printed, and thus, it is possible to provide the separation layer and the reaction layer in which the flow paths can be appropriately changed according to a purpose.

If the separation layer forming composition and the reaction layer forming composition of the present embodiment are used, it is possible to change the pores and the porosity of the porous resin, by appropriately adjusting the content of the polymerizable compound, the content of the porogen, the irradiation conditions of the active energy rays, and the like, so that it is possible to improve the degree of freedom in designing the performance of the separation layer and the reaction layer.

[Examples]

The present embodiment will be described in more detail based on examples below, but the present embodiment is not limited to the following examples.

(Example 1)

<Preparation of Liquid Composition>

Liquid Composition 1 of Example 1 was prepared by mixing materials in the proportions listed below.

- Tricyclodecane dimethanol diacrylate (DAICEL-ALLNEX LTD.): 25.2 mass%
- EBECRYL 4396 (polymerizable compound having functional group capable of forming a covalent bond with a hydroxyl group; manufactured by DAICEL-ALLNEX LTD.): 2.8 mass%
- Tetradecane (manufactured by Kanto Chemical Industry Co., Ltd.): 70.0 mass%
- OMNIRAD 819 (manufactured by BASF): 2.0 mass%

In the prepared Liquid Composition 1, the light transmittance at a wavelength of 550 nm was measured by the following method while stirring the liquid composition, and the light transmittance was 30% or more. The increase rate of the haze value in a haze measuring element produced by using the prepared liquid composition was measured by the following method and the increase rate was 1.0% or more.

Further, the viscosity of the prepared liquid composition at 25°C was measured by the following method and the viscosity was 1.0 mPa s or more and 30.0 mPa s or less.

[Method of Measuring Light Transmittance]

Specifically, the light transmittance was measured by the method described below.

First, the liquid composition was injected into a quartz cell. Next, the transmittance of light (visible light) of the liquid composition at a wavelength of 550 nm was measured under the following conditions while stirring the liquid composition by using a stirrer at 300 rpm. The transmittance was evaluated by the evaluation criteria mentioned below.

- Quartz cell: Special micro cell with screw cap (product name: M25-UV-2, manufactured by GL Sciences Inc.)
- Transmittance measurement device: USB4000, manufactured by Ocean Optics, Inc.
- Stirring speed: 300 rpm
- Measurement wavelength: 550 nm
- Reference: Light transmittance at a wavelength of 550 nm measured and acquired when the quartz cell was filled with air (transmittance: 100%)

(Evaluation Criteria)

a: Light transmittance of 30% or more (polymerizable compound and porogen are compatible)
b: Light transmittance of less than 30% (polymerizable compound and liquid are incompatible)

[Method of Measuring Increase Rate of Haze Value]

Specifically, the increase rate of the haze value was measured by the method described below.

- Preparation of Haze Measuring Element -

First, fine resin particles were uniformly dispersed on a non-alkali glass substrate as a substrate by spin coating to obtain a gap agent. Subsequently, a substrate coated with the gap agent and a non-alkali glass substrate not coated with the gap agent were attached to each other so that the surface coated with the gap agent was sandwiched. Next, a liquid composition was filled into the space between the attached substrates by utilizing a capillary phenomenon, to prepare a "pre-UV irradiation haze measuring element". Subsequently, the pre-UV irradiation haze measuring element was irradiated with UV light to cure the liquid composition. Finally, the peripheries of the substrates were sealed with a sealing agent to prepare a "haze measuring element". Various preparation conditions are described below.

- Non-alkali glass substrate: OA-10G, manufactured by Nippon Electric Glass Co., Ltd., 40 mm, t = 0.7 mm
- Gap agent: Fine resin particles MICROPEARL GS-L100, manufactured by Sekisui Chemical Co., Ltd., average particle diameter of 100 $\mu$m
- Spin coating conditions: dispersion droplet amount of 150 $\mu$L, rotation speed of 1000 rpm, rotation time 30 s
- Amount of liquid composition being filled: 160 $\mu$L
- UV irradiation conditions: UV-LED used as light source, light source wavelength of 365 nm, irradiation intensity 30 mW/cm$^2$, irradiation time 20 s
- Sealing agent: TB3035B (manufactured by ThreeBond Group)

- Measurement of Haze Value (Haze) -

Next, the prepared pre-UV irradiation haze measuring element and the haze measuring element were used to measure the haze value (haze). The measured value of the pre-UV irradiation haze measuring element was used as a reference value (a haze value of 0) to calculate the increase rate of the measured value (haze value) of the haze measuring element with respect to the measured value of the pre-UV irradiation haze measuring element. The increase rate was evaluated by the evaluation criteria mentioned below.

A device used for the measurement is indicated below.

- Haze measurement device: Haze meter NDH 5000, manufactured by NIPPON DENSHOKU INDUSTRIES CO., LTD. (Evaluation Criteria)

a: Increase rate of haze value of 1.0% or more (resin and porogen are incompatible)
b: Increase rate of haze value of less than 1.0% (resin and liquid are compatible)

[Method of Measuring Viscosity]

The viscosity of the liquid composition was measured at 25°C by using a viscometer (device name: RE-550L, manufactured by TOKI SANGYO Co., Ltd.).

(Evaluation Criteria)

a: Viscosity of 1.0 mPa s or more and 30.0 mPa s or less (good discharge properties are obtained by an inkjet method)
b: Viscosity of less than 1.0 mPa s, or more than 30.0 mPa·s

<Manufacturing of Laminated Structure Body>

- Application Step -

First, the prepared Liquid Composition 1 was filled into the apparatus for manufacturing a porous resin illustrated in FIG. 3. In the printing portion 10, the liquid composition was applied from the printing device 1a onto the conveyed printing base material 4 to form a continuous film. The liquid volume of the liquid composition was set so that, when a printing base material was applied onto a non-porous base material such as copper foil, the thickness of the formed continuous film was about 20 $\mu$m.

An inkjet head (GENS head, manufactured by Ricoh Printing Systems Co., Ltd.) was used as the printing device 1a, and a base material in which an active material layer was formed on a perforated copper foil prepared by a procedure described below was used as the printing base material 4.

The liquid composition was stably discharged from the inkjet head, and no nozzles failing to discharge, bending in the discharge, or the like were observed.

- Preparation of Base Material Having Active Material Layer Formed on Perforated Copper Foil -

An active material dispersion was prepared by uniformly dispersing in water 97.0 parts by mass of graphite particles (having an average particle diameter of 10 $\mu$m) as an active material, 1.0 parts by mass of cellulose as a thickener, and 2.0 parts by mass of an acrylic resin as a binder. This dispersion was applied onto a perforated copper foil having a thickness of 8 $\mu$m, serving as an electrode base. The obtained coating film was dried at 120°C for 10 minutes and then pressed, to obtain an electrode base on which an active material layer having a thickness of 60 $\mu$m is formed.

- Irradiation Step -

Next, the printing base material 4 after the application step was conveyed into the polymerization portion 20, which was filled with nitrogen by the polymerization-inactive gas circulating device 2b so that the oxygen concentration was 0%, and the printing base material 4 was irradiated with UV light by the light irradiation device 2a at an irradiation intensity of 30 mW/cm$^2$ for 3 seconds. The light irradiation device 2a was a UV-LED device and had a peak wavelength of 365 nm.

The time from the application step of the liquid composition to the irradiation step was adjusted so that a penetration film thickness was 0 $\mu$m, that is, a film thickness formed on the base material was 20 $\mu$m.

- Removal Step -

Further, the printing base material 4 after the irradiation step was conveyed into the heating portion 30 heated to 120°C by the heating device 3a, to remove remaining liquid and the like into the atmosphere. Thus, a laminated structure body of Example 1 having a co-continuous structure was manufactured in which a white porous resin having an average thickness of about 20 $\mu$m was formed on a base material.

(Example 1-2)

A laminated structure body of Example 1-2 was manufactured similarly to Example 1, except that the printing base material 4 in Example 1 was changed to a polyethylene porous resin sheet used as an insulating layer for a power generation element.

(Example 2)

Liquid Composition 2 and a laminated structure body of Example 2 were manufactured similarly to Example 1, except that the proportions of the materials in the liquid composition in Example 1 were changed as follows.

- Tricyclodecane dimethanol diacrylate (DAICEL-ALLNEX LTD.): 27.7 mass%
- EBECRYL 4396 (polymerizable compound having functional group capable of forming a covalent bond with a hydroxyl group; manufactured by DAICEL-ALLNEX LTD.): 0.3 mass%
- Tetradecane (manufactured by Kanto Chemical Industry Co., Ltd.): 70.0 mass%
- OMNIRAD 819 (manufactured by BASF): 2.0 mass%

In the prepared liquid composition, the light transmittance at a wavelength of 550 nm was measured by the method described above while stirring the liquid composition, and the light transmittance was 30% or more. The increase rate of the haze value in a haze measuring element produced by using the prepared liquid composition was measured by the method described above and the increase rate was 1.0% or more.
Further, the viscosity of the prepared liquid composition at 25°C was measured by the method described above and the viscosity was 1.0 mPa s or more and 30.0 mPa s or less.

(Example 3)

Liquid Composition 3 and a laminated structure body of Example 3 were manufactured similarly to Example 1, except that the proportions of the materials in the liquid composition in Example 1 were changed as follows.

- Tricyclodecane dimethanol diacrylate (DAICEL-ALLNEX LTD.): 25.2 mass%
- EBECRYL 4396 (polymerizable compound having functional group capable of forming a covalent bond with a hydroxyl group; manufactured by DAICEL-ALLNEX LTD.): 1.4 mass%
- Tetradecane (manufactured by Kanto Chemical Industry Co., Ltd.): 70.0 mass%
- OMNIRAD 819 (manufactured by BASF): 2.0 mass%
- DURANOL T5652 (polycarbonate diol (component having hydroxyl group); manufactured by Asahi Kasei Corporation): 1.4 mass%

In the prepared liquid composition, the light transmittance at a wavelength of 550 nm was measured by the method described above while stirring the liquid composition, and the light transmittance was 30% or more. The increase rate of the haze value in a haze measuring element produced by using the prepared liquid composition was measured by the method described above and the increase rate was 1.0% or more.
Further, the viscosity of the prepared liquid composition at 25°C was measured by the method described above and the viscosity was 1.0 mPa s or more and 30.0 mPa s or less.

(Example 4)

Liquid Composition 4 and a laminated structure body of Example 4 were manufactured similarly to Example 1, except that the proportions of the materials in the liquid composition in Example 1 were changed as follows.

- Tricyclodecane dimethanol diacrylate (DAICEL-ALLNEX LTD.): 25.2 mass%
- KARENZ (registered trademark) MOI-DEM (polymerizable compound having a blocked functional group capable of forming a covalent bond with a hydroxyl group; manufactured by Showa Denko Co., Ltd.): 1.4 mass%
- Tetradecane (manufactured by Kanto Chemical Industry Co., Ltd.): 70.0 mass%
- OMNIRAD 819 (manufactured by BASF): 2.0 mass%
- DURANOL T5652 (polycarbonate diol (component having hydroxyl group); manufactured by Asahi Kasei Corporation): 1.4 mass%

In the prepared liquid composition, the light transmittance at a wavelength of 550 nm was measured by the method described above while stirring the liquid composition, and the light transmittance was 30% or more. The increase rate of the haze value in a haze measuring element produced by using the prepared liquid composition was measured by the method described above and the increase rate was 1.0% or more.

Further, the viscosity of the prepared liquid composition at 25°C was measured by the method described above and the viscosity was 1.0 mPa s or more and 30.0 mPa s or less.

(Comparative Example 1)

Liquid Composition a and a laminated structure body were manufactured similarly to Example 1, except that the proportions of the materials in the liquid composition in Example 1 were changed as follows.

- Tricyclodecane dimethanol diacrylate (DAICEL-ALLNEX LTD.): 28.0 mass%
- Tetradecane (manufactured by Kanto Chemical Industry Co., Ltd.): 70.0 mass%
- OMNIRAD 819 (manufactured by BASF): 2.0 mass%

In the prepared liquid composition, the light transmittance at a wavelength of 550 nm was measured by the method described above while stirring the liquid composition, and the light transmittance was 30% or more. The increase rate of the haze value in a haze measuring element produced by using the prepared liquid composition was measured by the method described above and the increase rate was 1.0% or more.

Further, the viscosity of the prepared liquid composition at 25°C was measured by the method described above and the viscosity was 1.0 mPa s or more and 30.0 mPa s or less.

(Comparative Example 2)

Liquid Composition b and a laminated structure body were manufactured similarly to Example 1, except that the proportions of the materials in the liquid composition in Example 1 were changed as follows.

- Tricyclodecane dimethanol diacrylate (DAICEL-ALLNEX LTD.): 27.7 mass%
- EBECRYL 4396 (polymerizable compound having functional group capable of forming a covalent bond with a hydroxyl group; manufactured by DAICEL-ALLNEX LTD.): 0.3 mass%
- Cyclohexanone (manufactured by Kanto Chemical Industry Co., Ltd.): 70.0 mass%
- OMNIRAD 819 (manufactured by BASF): 2.0 mass%

In the prepared liquid composition, the light transmittance at a wavelength of 550 nm was measured by the method described above while stirring the liquid composition, and the light transmittance was 30% or more. The increase rate of the haze value in a haze measuring element produced by using the prepared liquid composition was measured by the method described above and the increase rate was not 1.0% or more.

Further, the viscosity of the prepared liquid composition at 25°C was measured by the method described above and the viscosity was 1.0 mPa s or more and 30.0 mPa s or less.

Next, the peel strength and the air permeability of the manufactured porous resin were evaluated by the method below. The evaluation results are presented in Table 2.

[Peel Strength]

The peel strength of the porous resin prepared in the printing base material 4 was evaluated. Specifically, an adhesive tape was attached to the porous film and peeled off. Subsequently, the cross section of the porous film was observed by SEM to confirm the site of the peeled surface resulting when the adhesive tape was peeled off. The results of the peel strength of the porous resin were evaluated based on the evaluation criteria mentioned below.

(Evaluation Criteria)

a+: Entire peeled surface occurs outside interface within porous film

a: Part of peeled surface occurs outside interface within porous film

b: Peeling occurs at interface within porous film

[Air Permeability]

The air permeability of the porous resin prepared in the printing base material 4 was measured according to JIS P8117. A Gurley densometer (manufactured by Toyo Seiki Seisaku-sho, Ltd.) was used as a device. The measurement results of the air permeability of the porous resin were evaluated based on the evaluation criteria mentioned below.

(Evaluation Criteria)

a: Air permeability of less than 300 seconds/100 mL

b: Air permeability of 300 seconds/100 mL or more

Table 1

| | | Polymerizable compound having functional group capable of forming covalent bond with hydroxyl group | Presence of porogen | Light transmittance [%] | Increase rate of haze value [%] | Viscosity [mPa·s] |
|---|---|---|---|---|---|---|
| Example 1 | Liquid Composition 1 | Yes | Yes | a | a | a |
| Example 2 | Liquid Composition 2 | Yes | Yes | a | a | a |
| Example 3 | Liquid Composition 3 | Yes | Yes | a | a | a |
| Example 4 | Liquid Composition 4 | Yes | Yes | a | a | a |
| Comparative Example 1 | Liquid Composition a | No | Yes | a | a | a |
| Comparative Example 2 | Liquid Composition b | Yes | No | a | b | a |

Table 2

| | Base material | Liquid composition | Peel strength | Gas permeability | Penetration into base material |
|---|---|---|---|---|---|
| Example 1 | Base Material 1 | Liquid Composition 1 | a+ | a | a |
| Example 1-2 | Base Material 2 | Liquid Composition 1 | a | a | a |
| Example 2 | Base Material 1 | Liquid Composition 2 | a+ | a | a |
| Example 3 | Base Material 1 | Liquid Composition 3 | a+ | a | a |

(continued)

| | Base material | Liquid composition | Peel strength | Gas permeability | Penetration into base material |
|---|---|---|---|---|---|
| Example 4 | Base Material 1 | Liquid Composition 4 | a+ | a | a |
| Comparative Example 1 | Base Material 1 | Liquid Composition a | b | a | a |
| Comparative Example 2 | Base Material 1 | Liquid Composition b | a | b | a |
| Base Material 1: Electrode base having active material layer formed on perforated copper foil<br>Base Material 2: Polyethylene porous resin sheet | | | | | |

The results are presented in Tables 1 and 2.

The results of Comparative Example 1 indicate that, if the polymerizable compound having a functional group capable of forming a covalent bond with a hydroxyl group is not included, it is difficult to manufacture a porous resin having high peel strength.

The results of Comparative Example 2 indicate that, if the increase rate of the haze value (haze) in the haze measuring element prepared by using the mixture as the liquid composition is not 1.0% or more, it is difficult to manufacture a porous resin having high air permeability.

(Example 5)

<Preparation Example of Power Storage Element Using Liquid Composition>

- Preparation of Negative Electrode -

A negative electrode active material dispersion was prepared by uniformly dispersing in water 97.0 parts by mass of graphite particles (having an average particle diameter of 10 $\mu$m) as a negative electrode active material, 1.0 parts by mass of cellulose as a thickener, and 2.0 parts by mass of an acrylic resin as a binder. This dispersion was applied onto a copper foil having a thickness of 8 $\mu$m, serving as a negative electrode base. The obtained coating film was dried at 120°C for 10 minutes and then pressed, to obtain an electrode composite portion having a thickness of 60 $\mu$m. Subsequently, a piece of 50 mm x 33 mm was cut from the electrode composite portion to prepare a negative electrode.

- Preparation of Positive Electrode -

A positive electrode active material dispersion was prepared by uniformly dispersing, in N-methylpyrrolidone as a liquid, 94.0 parts by mass of mixed particles including nickel, cobalt, and aluminum serving as a positive electrode active material, 3.0 parts by mass of Ketjen black as a conductive auxiliary agent, and 3.0 parts by mass of a polyvinylidene fluoride resin as a binder. This dispersion was applied by die coating onto an aluminum foil having a thickness of 15 $\mu$m, serving as an electrode base. The obtained coating film was dried at 120°C for 10 minutes and then pressed, to obtain an electrode composite portion having a thickness of 50 $\mu$m. Subsequently, a piece of 43 mm x 29 mm was cut from the electrode composite portion to prepare a positive electrode.

- Preparation of Separator -

Liquid Composition 1 of Example 1 was filled into an inkjet discharge device equipped with a GEN5 head (manufactured by Ricoh Printing Systems, Co., Ltd.). The liquid composition was discharged onto the negative electrode prepared as described above to form a coating region in the form of a solid image. Immediately thereafter, in an $N_2$ atmosphere, the coating region was irradiated with UV light (light source: UV-LED (manufactured by Phoseon, product name: FJ800), wavelength: 365 nm, irradiation intensity: 30 mW/cm$^2$, irradiation time: 20 s) to obtain a cured product. Next, the cured product was heated at 120°C for 1 minute using a hot plate to remove the liquid, thus obtaining a negative electrode (laminated structure body) integrally formed with a porous resin serving as a separator.

- Preparation of Power Storage Element -

The negative electrode integrally formed with the porous resin and the positive electrode prepared as described above were placed facing each other. Next, an electrolyte solution was injected, and the electrodes were sealed by using a laminate exterior material as an exterior coating to prepare a power storage element. The electrolyte solution being used was a solution including 1.5 mol/L of $LiPF_6$, which is an electrolyte, in a mixture of ethylene carbonate (EC) and dimethyl carbonate (DMC) (mixture having a mass ratio of "EC: DMC = 1: 1").

A test was conducted to confirm whether the prepared power storage element had a function as a power storage element, and it was confirmed that the power storage element had the function of a power storage element, for example, the power storage element performed charging and discharging.

For example, aspects of the present embodiment include the following aspects.

According to Aspect 1, a liquid composition contains a polymerizable compound and a liquid, in which

the polymerizable compound includes a polymerizable compound having a functional group capable of forming a covalent bond with a hydroxyl group,
the liquid composition forms a porous resin by polymerization,
a light transmittance at a wavelength of 550 nm measured while stirring the liquid composition is 30% or more, and
in a process where the liquid composition forms the porous resin by polymerization, an increase rate of a haze value in a haze measuring element before and after the polymerization is 1.0% or more.

According to Aspect 2, in the liquid composition according to Aspect 1 described above, the liquid composition includes a liquid composition for forming an insulating layer for a power storage element or a power generation element, and

the porous resin includes an insulating layer for a power storage element or a power generation element.

According to Aspect 3, in the liquid composition according to any one of Aspect 1 and Aspect 2 described above, the polymerizable compound has a polymerizable group including at least one selected from the group consisting of a (meth)acryloyl group and a vinyl group.

According to Aspect 4, in the liquid composition according to any one of Aspects 1 to 3 described above, the functional group capable of forming a covalent bond with a hydroxyl group includes at least one member selected from the group consisting of an isocyanate group, a carbodiimide group, an epoxy group, an alkoxysilyl group, a silanol group, and an oxazoline group.

According to Aspect 5, in the liquid composition according to any one of Aspects 1 to 4 described above, the functional group capable of forming a covalent bond with a hydroxyl group is an isocyanate group.

According to Aspect 6, in the liquid composition according to any one of Aspects 1 to 5 described above, the polymerizable compound further includes a polymerizable compound having a hydroxyl group.

According to Aspect 7, in the liquid composition according to any one of Aspects 1 to 6 described above, a content of the polymerizable compound in the liquid composition is 10.0 mass% or more and 50.0 mass% or less, and a content of the liquid in the liquid composition is 50.0 mass% or more and 90.0 mass% or less.

According to Aspect 8, in the liquid composition according to any one of Aspects 1 to 7 described above, the liquid has a boiling point of 50°C or higher and 250°C or lower.

According to Aspect 9, in the liquid composition according to any one of Aspects 1 to 8 described above, the polymerizable compound initiates a polymerization reaction by heat or light.

In Aspect 10, the liquid composition according to any one of Aspects 1 to 9 described above has a viscosity of 1 mPa s or more and 150 mPa s or less at 25°C.

In Aspect 11, the liquid composition according to any one of Aspects 1 to 10 described above has a viscosity of 1 mPa s or more and 30 mPa·s or less at 25°C.

According to Aspect 12, in the liquid composition according to any one of Aspects 1 to 11 described above, the porous resin has pores having a pore size of 0.01 $\mu$m or more and 10 $\mu$m or less.

According to Aspect 13, in the liquid composition according to any one of Aspects 1 to 12 described above, the porous resin has a porosity of 30% or more.

According to Aspect 14, in the liquid composition according to any one of Aspects 1 to 13 described above, the porous resin has a co-continuous structure in which a plurality of pores are continuously coupled.

In Aspect 15, a laminated structure body includes a base material and a porous resin obtained by polymerizing the liquid composition according to any one of Aspects 1 to 14 described above on the base material.

In Aspect 16, a storage container accommodates the liquid composition according to any one of Aspects 1 to 14 described above.

In Aspect 17, an apparatus for manufacturing a laminated structure body includes

the storage container according to Aspect 16 described above,
application means that apply the liquid composition accommodated in the storage container onto a base material, and
polymerization means that polymerize the liquid composition by applying heat or light.

According to Aspect 18, in the apparatus for manufacturing a laminated structure body according to Aspect 17 described above, the base material is an active material layer formed on an electrode base, and the laminated structure body is a laminated electrode, or
the base material is a film separator, and the laminated structure body is a laminated separator.

In Aspect 19, an apparatus for manufacturing a power storage element or a power generation element includes an electrode manufacturing portion that manufactures a laminated electrode by the apparatus for manufacturing a laminated structure body according to Aspect 18 described above, and
an element formation portion that manufactures a power storage element or a power generation element by using the laminated electrode.

In Aspect 20, a method of manufacturing a laminated structure body includes:

applying the liquid composition according to any one of Aspects 1 to 14 described above onto a base material, and
polymerizing the liquid composition by application of heat or light.

According to Aspect 21, in the method of manufacturing a laminated structure body according to Aspect 20 described above, the polymerizable compound in the liquid composition further includes a polymerizable compound having a hydroxyl group,

the method further includes forming, by applying external energy to the liquid composition or the porous resin, a covalent bond between a hydroxyl group in the polymerizable compound having a hydroxyl group, and a functional group capable of forming a covalent bond with a hydroxyl group in the polymerizable compound having a functional group capable of forming a covalent bond with a hydroxyl group, and
forming is performed simultaneously with the polymerizing or after the polymerizing.

According to Aspect 22, in the method of manufacturing a laminated structure body according to Aspect 21 described above, the forming is performed simultaneously with the polymerizing.

According to Aspect 23, the method of manufacturing a laminated structure body according to Aspect 21 described above further includes heating after the polymerizing, and
the forming is performed after the polymerizing and before the heating.

According to Aspect 24, the method of manufacturing a laminated structure body according to Aspect 21 described above further includes heating after the polymerizing, and
the forming is performed simultaneously with the heating.

According to Aspect 25, the method of manufacturing a laminated structure body according to Aspect 21 described above further includes heating performed after the polymerizing, and
the forming is performed after the heating.

According to Aspect 26, in the method of manufacturing a laminated structure body according to any one of Aspect 20 to Aspect 25 described above, the base material includes at least one of an active material layer on an electrode base to form a laminated electrode and a film separator to form a laminated separator.

In Aspect 27, a method of manufacturing a power storage element or a power generation element includes manufacturing a laminated electrode by the method of manufacturing a laminated structure body according to Aspect 26 described above, and
manufacturing a power storage element or a power generation element by using the laminated electrode.

According to the liquid composition according to any one of Aspects 1 to 14 described above, the laminated structure body according to Aspect 15 described above, the storage container according to Aspect 16 described above, the apparatus for manufacturing a laminated structure body according to any one of Aspect 17 and Aspect 18 described above, the apparatus for manufacturing a power storage element or a power generation element according to Aspect 19 described above, the method of manufacturing a laminated structure body according to any one of Aspect 20 to Aspect 26 described above, and the method of manufacturing a power storage element or a power generation element according to Aspect 27 described above, it is possible to solve various conventional problems and achieve the object of the present embodiment.

Any one of the above-described operations may be performed in various other ways, for example, in an order different from the one described above.

**Claims**

1. A liquid composition, comprising:

   a polymerizable compound; and
   a liquid, wherein
   the polymerizable compound includes a polymerizable compound having a functional group capable of forming a covalent bond with a hydroxyl group,
   the liquid composition forms a porous resin by polymerization,
   a light transmittance at a wavelength of 550 nm measured while stirring the liquid composition is 30% or more, and
   in a process where the liquid composition forms the porous resin by polymerization, an increase rate of a haze value in a haze measuring element before and after the polymerization is 1.0% or more.

2. The liquid composition according to claim 1, wherein the liquid composition includes a liquid composition for forming an insulating layer for a power storage element or a power generation element, and
   the porous resin includes an insulating layer for a power storage element or a power generation element.

3. The liquid composition according to claim 1 or 2, wherein the polymerizable compound has a polymerizable group including at least one selected from the group consisting of a (meth)acryloyl group and a vinyl group.

4. The liquid composition according to any one of claims 1 to 3, wherein the functional group capable of forming a covalent bond with a hydroxyl group includes at least one member selected from the group consisting of an isocyanate group, a carbodiimide group, an epoxy group, an alkoxysilyl group, a silanol group, and an oxazoline group.

5. The liquid composition according to any one of claims 1 to 4, wherein the functional group capable of forming a covalent bond with a hydroxyl group includes an isocyanate group.

6. The liquid composition according to any one of claims 1 to 5, wherein the polymerizable compound further includes a polymerizable compound having a hydroxyl group.

7. The liquid composition according to any one of claims 1 to 6, wherein the porous resin has pores having a pore size of 0.01 $\mu$m or more and 10 $\mu$m or less.

8. The liquid composition according to any one of claims 1 to 7, wherein the porous resin has a porosity of 30% or more.

9. The liquid composition according to any one of claims 1 to 8, wherein the porous resin has a co-continuous structure in which a plurality of pores are continuously coupled.

10. A laminated structure body, comprising:

    a base material; and
    a porous resin obtained by polymerizing the liquid composition according to any one of claims 1 to 9 on the base material.

11. A method of manufacturing a laminated structure body, the method comprising:

    applying the liquid composition according to any one of claims 1 to 9 onto a base material; and
    polymerizing the liquid composition by application of heat or light.

12. The method according to claim 11, wherein the polymerizable compound in the liquid composition further includes a polymerizable compound having a hydroxyl group,

    the method further comprises forming, by applying external energy to the liquid composition or the porous resin, a covalent bond between a hydroxyl group in the polymerizable compound having a hydroxyl group, and a functional group capable of forming a covalent bond with a hydroxyl group in the polymerizable compound having a functional group capable of forming a covalent bond with a hydroxyl group, and
    the forming is performed simultaneously with the polymerizing or after the polymerizing.

**13.** The method according to claim 11 or 12, further comprising heating after the polymerizing.

**14.** The method according to any one of claims 11 to 13, wherein the base material includes at least one of an active material layer on an electrode base to form a laminated electrode and a film separator to form a laminated separator.

**15.** A method of manufacturing a power storage element or a power generation element, the method comprising:

manufacturing a laminated electrode by the method according to claim 14; and
manufacturing a power storage element or a power generation element by using the laminated electrode.

FIG. 1

FIG. 2

# FIG. 3

EP 4 311 597 A1

# FIG. 4

FIG. 5

# FIG. 6

EP 4 311 597 A1

EP 4 311 597 A1

# FIG. 7

48

# FIG. 8

# FIG. 9

NOZZLE PLATE LONG DIRECTION

NOZZLE PLATE
SHORT DIRECTION

LIQUID DISCHARGE DIRECTION

FIG. 10

# FIG. 11

NOZZLE PLATE LONG DIRECTION

NOZZLE PLATE SHORT DIRECTION

LIQUID DISCHARGE DIRECTION

EP 4 311 597 A1

# FIG. 12

# FIG. 13

LIQUID DISCHARGE
DIRECTION ⊙ → NOZZLE PLATE
LONG DIRECTION

↓

NOZZLE PLATE
SHORT DIRECTION

EP 4 311 597 A1

FIG. 14

EP 4 311 597 A1

Europäisches
Patentamt

European
Patent Office

Office européen
des brevets

# EUROPEAN SEARCH REPORT

Application Number

EP 23 18 7484

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2002 178630 A (OMRON TATEISI ELECTRONICS CO) 26 June 2002 (2002-06-26) | 1-13 | INV. B01D67/00 B01D69/12 C08F122/12 C08F222/10 C08J9/28 |
| A | * paragraph [0035]; example 3 * | 14,15 | |
| X | JP 2000 001565 A (KAWAMURA INST CHEM RES) 7 January 2000 (2000-01-07) | 1-13 | |
| A | * example 4 * | 14,15 | |
| X | WO 2022/112979 A1 (RICOH CO LTD [JP]; OHKIMOTO MIKU [JP] ET AL.) 2 June 2022 (2022-06-02) * paragraph [0015]; claims; examples * | 1-15 | |
| X | WO 2008/016301 A1 (FUJIFILM MFG EUROPE BV [NL]; ITAMI YUJIRO [NL]; KASE AKIRA [NL]) 7 February 2008 (2008-02-07) | 1-13 | |
| A | * claims; examples; table 1 * | 14,15 | |

TECHNICAL FIELDS
SEARCHED      (IPC)

B01D
C08J
C08F

The present search report has been drawn up for all claims

| Place of search | Date of completion of the search | Examiner |
|---|---|---|
| Munich | 29 November 2023 | Zeslawski, Wojciech |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                           

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 7484

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2023

| Patent document cited in search report | | Publication date | Patent family member(s) | | Publication date |
|---|---|---|---|---|---|
| JP 2002178630 | A | 26-06-2002 | NONE | | |
| JP 2000001565 | A | 07-01-2000 | JP | 3812924 B2 | 23-08-2006 |
| | | | JP | 2000001565 A | 07-01-2000 |
| WO 2022112979 | A1 | 02-06-2022 | CN | 116829652 A | 29-09-2023 |
| | | | EP | 4251700 A1 | 04-10-2023 |
| | | | JP | 2022086087 A | 09-06-2022 |
| | | | KR | 20230088797 A | 20-06-2023 |
| | | | US | 2023340293 A1 | 26-10-2023 |
| | | | WO | 2022112979 A1 | 02-06-2022 |
| WO 2008016301 | A1 | 07-02-2008 | EP | 2051860 A1 | 29-04-2009 |
| | | | JP | 2009545662 A | 24-12-2009 |
| | | | US | 2009202813 A1 | 13-08-2009 |
| | | | WO | 2008016301 A1 | 07-02-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004051783 A
- JP 2016104551 A